# EUROPÄISCHE PATENTSCHRIFT

(11) **EP 0 883 367 B1**
(45) Veröffentlichungstag und Bekanntmachung des Hinweises auf die Patenterteilung: **03.05.2000**
(21) Anmeldenummer: 97903330.5
(22) Anmeldetag: 19.02.1997
(51) Int. Cl.: A47L 5/22, H02K 9/06

(54) **SCHNELLAUFENDER ELEKTROMOTOR**
HIGH-SPEED ELECTRIC MOTOR
MOTEUR ELECTRIQUE A HAUTE VITESSE

(30) Priorität: 20.02.1996 DE 19606146
(43) Veröffentlichungstag der Anmeldung: 16.12.1998
(73) Patentinhaber: Vorwerk & Co. Interholding GmbH, 42275 Wuppertal (DE)
(72) Erfinder: VARNHORST, Mathias, D-42349 Wuppertal (DE); GERTZ, Hans-Jürgen, D-42651 Solingen (DE); ARNOLD, Peter, D-42489 Wülfrath (DE); PSZOLA, Peter, D-53123 Bonn (DE); MÜLLER, Manuela, D-58332 Schwelm (DE); MESLI, Richard, D-58332 Schwelm (DE)
(74) Vertreter: Müller, Enno, Dipl.-Ing.
(86) Internationale Anmeldenummer: EP9700794
(87) Internationale Veröffentlichungsnummer: WO9730621

(56) Entgegenhaltungen:
- EP-A- 0 416 468
- EP-A- 0 602 007
- DE-A- 3 712 567
- US-A- 5 454 690
- PATENT ABSTRACTS OF JAPAN vol. 95, no. 6, 31.Juli 1995 & JP 07 075281 A (MATSUSHITA ELECTRIC), 17.März 1995,

## Beschreibung

Die Erfindung betrifft einen schnellaufenden Elektromotor mit einem Rotor und einem Stator und einem auf einer Motorwelle befestigten Gebläserad, wobei durch eine Umlenkung die durch das Gebläserad gelieferte Motorkühlluft teilweise den Motor durchströmt und teilweise außen an einem im wesentlichen zylindrischen Motorgehäuse entlangströmt, wobei die Umlenkung durch einen Diffusor in Zusammenwirkung mit einem Gebläsetopf erreicht ist und wobei der Diffusor eine Diffusorplatte aufweist, an welcher, einem Motorraum zugewandte Rückführschaufeln ausgebildet sind und zugeordnet dem Diffusor eine im wesentlichen kreisringförmige Auslaßöffnung zur Führung der Kühlluft außen an dem Motorgehäuse vorgesehen ist.

Derartige Ausbildungen sind als Motor-Gebläse-Einheiten bekannt, wobei diese bevorzugt Einsatz in Staubsaugern oder dergleichen finden. Beim Betrieb eines solchen Staubsaugermotors muß neben den aerodynamischen Werten auch auf eine ausreichende Kühlung des Elektromotors geachtet werden. Bei Bypass-Motoren erfolgt die Kühlung durch einen vom Arbeitsluftstrom unabhängigen Kühlluftstrom, wobei zumeist Axiallüfter verwendet werden, die auf dem der Hauptabtriebsseite entgegengesetzten Wellenende angebracht sind. In Haushalts-Staubsaugern werden zumeist Universal-Motoren eingesetzt, die durch den, den Schmutz zum Staubfilterbeutel transportierenden Arbeitsluftstrom gekühlt werden. Die Luft wird dabei durch den engen Zwischenraum zwischen Stator und Rotor geführt. Bei Motoren mit einem den Stator umschließenden, weitestgehend zylindrischen Motorgehäuse, welches auch zur Aufnahme eines Lagers und des Stators dient, wird die Luft sowohl zwischen Stator und Rotor als auch zwischen Stator und Motorgehäuse geführt. Dies gewährleistet eine ausreichende Kühlung des Motors. Es ist weiter bekannt, an dem der Gebläseseite entgegengesetzten Ende des Motorgehäuses dieses mit Öffnungen zu versehen, zum Austritt der Kühlluft.

Ein Elektromotor der in Rede stehenden Art ist aus der US-A 5 454 690 bekannt, bei welchem, einem Diffusor zugeordnet, eine kreisringförmige Durchströmöffnung vorgesehen ist. Durch letztere strömt im Betrieb des Elektromotors Luft zur Kühlung der Motorgehäuseaußenseite.

Durch die engen Zwischenräume zwischen Stator und Rotor bzw. Stator und Motorgehäuse entstehen erhebliche Strömungsverluste. Hierdurch bedingt muß das Motorgehäuse erheblich vergrößert werden, um ausreichende freie Querschnittsflächen zu erreichen. Hierzu werden im allgemeinen die Statorschnitte rechteckig ausgeführt, so daß der Stator das Motorgehäuse lediglich an vier Eckpunkten innenseitig berührt. Bedingt durch den größeren Gehäusedurchmesser wird hierbei auch eine freie Köcherlänge eines Kohlebürsten-Aufnahmegehäuses zwischen Motorgehäuse und Kollektor vergrößert, was zu erhöhten Schwingungsproblemen am Köcher führt. Diese Schwingungen wirken sich negativ auf die Kohlestandzeit aus und sind daher als äußerst kritisch zu bewerten. Dieses Schwingungsproblem wird zusätzlich noch durch die Luftaustrittsöffnungen im Motorgehäuse verschärft. Diese Öffnungen müssen für den Gesamtvolumenstrom ausgelegt sein. Darüber hinaus ist das Gewicht des Motorgehäuses durch die Vergrößerung erhöht. Der größere Durchmesser erschwert ferner die Gestaltung ausreichend stabiler Lagerstellen, insbesondere auf der Gebläseseite, wo das auf dieser Seite offene Motorgehäuse durch eine angeschraubte Brücke bzw. Lageraufnahmeteil komplettiert wird. Letzteres ist bestimmt für die Aufnahme einer zweiten Lagerstelle.

Im Hinblick auf den vorbeschriebenen Stand der Technik wird die Aufgabe der Erfindung darin gesehen, einen hinsidtlich der obengenannten Nachteile verbesserten, schnellaufenden Elektromotor anzugeben.

Diese Aufgabe ist beim Gegenstand des Anspruches 1 gelöst, wobei darauf abgestellt ist, daß die Breite der Auslaßöffnung 50 bis 70% des senkrecht, parallel zur Rotorwelle gemessenen Abstandes von der Diffusorplatte zu der Auslaßöffnung beträgt.

Um eine möglichst kompakte Motor-Gebläse-Einheit zu erhalten, ist die als Luftaustrittsbereich gebildete Auslaßöffnung im Bereich des Gebläserades geschaffen worden, wobei die Auslaßöffnung weitestgehend aus zwei konzentrischen Kreisen gebildet wird. Bevorzugt wird hierbei eine Ausgestaltung, bei welcher diese konzentrischen Kreise zum einen aus einem Innendurchmesser eines Lageraufnahmeteiles und aus einem Außendurchmesser des diesem Lageraufnahmeteiles zugewandten Endes des Motorgehäuses gebildet ist. Auf der dem Motorgehäuse abgewandten Seite des Lageraufnahmeteiles ist der Diffusor angeordnet, welcher unterseitig dem Motorraum zugewandte Rückführschaufeln aufweist. Der radiale Abstand zwischen dem Außendurchmesser des Motorgehäuses und dem Innendurchmesser des Lageraufnahmeteiles gibt die Breite der Auslaßöffnung an. Bei einem beispielhaften Abstand - parallel zur Rotorwelle gemessen - von der Diffusorplatte zur Auslaßöffnung von ca. 13mm beträgt die Breite der Auslaßöffnung ca. 7,5mm. Das Lageraufnahmeteil ist aus einer noch nicht veröffentlichten deutschen Patentanmeldung der Anmelderin bekannt. Aus dieser Anmeldung ist es bekannt, daß sich das Lageraufnahmeteil im wesentlichen aus einem kreisringförmigen Außenbereich und zwei radial nach innen weisenden Stegen zusammensetzt. Mittig zwischen diesen beiden Stegen ist eine Lagerstelle ausgebildet. Durch die zwei Stege und die zwischen diesen aufgenommene Lagerstelle werden innerhalb des kreisringförmigen Außenbereiches zwei Luftdurchtrittsbereiche ausgebildet, deren Abmessungen so gewählt sind, daß sich diese von einem dem Motorraum zugeordneten Bereich bis einem der Motorgehäuse-Außenwandung zugewandten Bereich erstrecken. Durch die erwähnte Ausgestaltung der Auslaßöffnung wird nicht der gesamte Arbeitsvolumenstrom durch den Motor geführt, sondern auch zum Teil außen an dem Motorgehäuse entlang geführt. Bedingt durch diese Ausgestaltung können bei gleichem Druckverlust die freien Querschnitte im Motor kleiner gewählt werden, wobei auch ein kleinerer Motorgehäusedurchmesser ausreichend ist. In einer vorteilhaften Weiterbildung des Erfindungsgegenstandes ist vorgesehen, daß die Auslaßöffnung segmentiert ist durch sich im wesentlichen radial erstreckende Befestigungsstege des Motorgehäuses. Die als Ringfläche ausgebildete Auslaßöffnung wird somit stellenweise unterbrochen, wobei bevorzugt wird, daß das Motorgehäuse vier gleichmäßig auf dem Umfang verteilte Befestigungsstege aufweist. Weiter wird vorgeschlagen, daß eine Höhe der Rückführleitschaufeln im wesentlichen dem Abstand von der Diffusorplatte bis zur Auslaßöffnung entspricht. Dies hat zur Folge, daß die Auslaßöffnung eine Breite von etwa 50 bis 70% der Rückführleitschaufelhöhe aufweist. Um eine ausreichende Kühlung des Elektromotors zu gewährleisten, wird vorgeschlagen, daß der Stator im Querschnitt teilweise an das Motorgehäuse angepaßt ist und teilweise mit Abstand zu dem Motorgehäuse verläuft, wobei die an das Motorgehäuse angepaßten Bereich mindestens 20% des Motorgehäuseumfanges entsprechen. Wie bereits im Stand der Technik erwähnt, ist es bekannt, den Stator im Querschnitt rechteckig auszuführen. Weiter sind Ausführungen bekannt, bei welchen die Eckbereiche abgerundet ausgebildet sind. Ein derartig ausgebildeter Stator berührt das Motorgehäuse innenseitig lediglich punktuell, d. h. an vier Punkten. Die Erfindung jedoch schlägt vor, diese Berührungsflächen zu vergrößern. Bedingt durch diese Ausgestaltung wird die Kühlleistung nicht nur durch einen unmittelbaren Anteil erbracht, der erzeugt wird durch den Motorkühlluftstrom zwischen Stator und Rotor sowie zwischen Stator und Motorgehäuse, sondern auch durch einen mittelbaren Anteil, welcher auf die Wärmeleitung vom Stator zum Motorgehäuse beruht. Das Motorgehäuse wiederum wird durch den Hauptanteil des Arbeitsvolumenstromes über die gesamte Motorgehäuseoberfläche gekühlt. Das Motorgehäuse bildet in dieser Funktion ein zylinderförmiges Kühlelement. In einer bevorzugten Ausgestaltung des Erfindungsgegenstandes ist vorgesehen, daß die angepaßten Bereiche 35 bis 45% des Motorgehäuseumfangs entsprechen. Es sind jedoch auch Ausbildungen denkbar, bei welchen eine Anpassung über 75 bis 85% des Gehäuseumfanges gewählt ist. Es ist somit ein flächiger wärmeleitender Kontakt zum Motorgehäuse geschaffen. Hierzu wird weiter vorgeschlagen, daß die Umfangslinie eines angepaßten Bereiches kreisabschnittsförmig verläuft. Bevorzugt wird hierbei eine Ausgestaltung, bei welcher vier gleich ausgebildete angepaßte Bereiche vorgesehen sind, welche in der Addition ihrer Kreisabschnittslängen etwa 35 bis 45% des Motorgehäuseumfanges entsprechen. Hier erweist es sich als besonders vorteilhaft, daß ein Radius des kreisabschnittsförmigen Bereiches des Stators etwa dem Radius des Motorgehäuses in diesem Bereich entspricht. So ist vorgesehen, daß bei einem in diesem Bereich zylindrisch ausgebildeten Motorgehäuse, eine Verlängerung der Kreisabschnittslinie des angepaßten Bereiches der Umfangslinie des Motorgehäuseinnenraumes entspricht. In einer Weiterbildung des Erfindungsgegenstandes ist vorgesehen, daß der Statorquerschnitt vier kreisabschnittsförmige Bereiche aufweist, die umfangsaußenseitig jeweils durch gerade verlaufende Bereiche verbunden sind. Es ergibt sich somit ein Querschnitt des Stators, welcher im wesentlichen quadratisch mit abgerundeten Eckbereichen ausgebildet ist, wobei der Radius der kreisabschnittsförmigen Eckbereiche dem Innenradius des Motorgehäuses entspricht und wobei weiter ein Schnittpunkt der Verlängerung zweier rechtwinklig zueinander ausgerichteter, gerade verlaufender Bereiche außerhalb des Motorgehäuseinnenraumes liegt. Weiterhin ist vorgesehen, daß im Übergang vom kreisabschnittsförmigen Bereich zum gerade verlaufenden Bereich eine in Rotorwellenrichtung verlaufende, nutförmige Einbuchtung ausgebildet ist zur Zusammenwirkung mit einer in den Innenraum des Motorgehäuses ragenden Längssicke desselben. Bei einer bevorzugten Ausgestaltung des Stators mit vier kreisabschnittsförmigen Bereichen, ist vorgesehen, vier nutförmige Einbuchtungen auszubilden, wobei die Anordnung weiter bevorzugt so gewählt ist, daß jeweils zwei Einbuchtungen in den beiden Übergangsbereichen von einem gerade verlaufenden Bereich zu den diesem zugeordneten beiden kreisabschnittsförmigen Bereichen positioniert sind. Bei einem symmetrischen Querschnitt des Stators bedeutet dies, daß zwei gerade verlaufende Bereiche in ihren Übergängen zu den kreisabschnittsförmigen Bereichen keine Einbuchtungen aufweisen. Weiter wird vorgeschlagen, daß in einem gerade verlaufenden Bereich des Stators ein Luftspalt zwischen einer Stator-Außenfläche und einer Motorgehäuse-Innenfläche gebildet ist. Diese Luftspalte dienen zum Durchtritt des Motorkühlluftstromes zwischen Stator und Motorgehäuse. Hierzu wird weiter vorgeschlagen, daß eine freie Querschnittsfläche in dem Motorgehäuse zwischen dem Stator und dem Rotor bzw. zwischen dem Stator und dem Motorgehäuse etwa 0,1 bis 0,5, bevorzugt 0,2 bis 0,4, des Querschnittes der Auslaßöffnung entspricht. Diese freie Querschnittsfläche ist die maßgebende Größe für die Aufteilung des mittelbaren und unmittelbaren Kühlluftstromes. Bei einem schnellaufenden Elektromotor der in Rede stehenden Art, wobei der Rotor einen Kollektorabschnitt aufweist und in dem Motorgehäuse kollektorseitig Kühlluftöffnungen ausgebildet sind, ist es weiterhin von Vorteil, daß das Motorgehäuse kollektorseitig einen kegelstumpfartigen Abschnitt aufweist, welcher in Umfangsrichtung von abgeflachten Abschnitten unterbrochen ist. Aufgrund der zusätzlichen Kühlleistung durch das Motorgehäuse können die Kühlluftöffnungen minimiert werden für den kleinen Motorkühlluftstrom, wodurch weiter auch eine größere Struktursteifigkeit des Motorgehäuses erzielt wird. Eine weitere Steigerung dieser Struktursteifigkeit wird erreicht, in dem das im wesentlichen zylindrisch ausgebildete Motorgehäuse kollektorseitig kegelstumpfartig ausgebildet ist. Dieser kegelstumpfartige Abschnitt ist in Umfangsrichtung von bevorzugt zwei symmetrisch zueinander angeordneten, abgeflachten Abschnitten unterbrochen. Diese abgeflachten Abschnitte sind gleichfalls als geschlossene Flächen ausgebildet. Es wird eine Ausbildung bevorzugt, bei welcher ein abgeflachter Abschnitt sich sowohl in dem kegelstumpfartigen Abschnitt des Motorgehäuses wie in dem zylindrischen Bereich des Motorgehäuses erstreckt. Diese planen Flächen der abgeflachten Abschnitt weisen bevorzugt eine in Rotorwellenrichtung gemessene Länge auf, welche etwa der halben, in gleicher Richtung gemessenen Gesamtlänge des Motorgehäuses entspricht. Die quer zur Rotorwellenachse gemessene Breite des abgeflachten Abschnittes entspricht etwa 65 bis 80% des Motorgehäuse-Außendurchmessers, bevorzugt 75%. Es wird vorgeschlagen, daß die Kühlluftöffnungen nur in dem zylindrischen Bereich und in den abgeflachten Abschnitten ausgebildet sind. Hierbei wird weiterbevorzugt, daß die Kühlluftöffnungen in den abgeflachten Abschnitten und in dem zylindrischen Bereich jeweils um 180° versetzt sind. Bevorzugt wird hierbei eine Ausgestaltung, bei welcher insgesamt vier Kühlluftöffnungen vorgesehen sind, zwei in dem zylindrischen Bereich und jeweils eine in einem abgeflachten Abschnitt. Vorteilhafterweise ist vorgesehen, daß die Kühlluftöffnungen in den abgeflachten Abschnitten in eine Halterungsausnehmung für ein Aufnahmegehäuse für Kohlebürsten übergehen. Derartige Aufnahmegehäuse für Kohlebürsten sind aus einer noch nicht veröffentlichten europäischen Patentanmeldung der Anmelderin bekannt. Diese Aufnahmegehäuse werden auch als Köcher bezeichnet und bestehen aus einem elektrisch isolierten Material wie beispielsweise Duroplast. Ein solches Aufnahmegehäuse oder Köcher wird im Bereich einer planen Fläche bzw. abgeflachten Abschnittes durch die dort ausgebildete Halterungsausnehmung geführt und an dem abgeflachten Abschnitt befestigt. Die bereits erwähnte hohe Struktursteifigkeit im Bereich des Kegelstumpfes und der abgeflachten Abschnitte wird noch dadurch erhöht, daß die abgeflachten Abschnitte im unbeeinflußten Zustand eine konkave Ausformung aufweisen. Mit dem unbeeinflußten Zustand ist hierbei der Zustand der abgeflachten Abschnitte vor einer Montage des Aufnahmegehäuses gemeint. Eine weitere Erhöhung der Struktursteifigkeit ist dadurch gegeben, daß die Aufnahmegehäuse für die Kohlebürsten eine solche Erstreckung aufweisen, daß sie sich im wesentlichen bis in die den Übergang der Flachbereiche zu den kegelstumpfartigen Abschnitten bildenden Ecken erstrekken. Die Erstreckung der Aufnahmegehäuse, gemessen in Umfangsrichtung des Motorgehäuses, entspricht somit etwa der Erstreckung eines abgeflachten Abschnittes quer zur Rotorwellenachse. Die Raumecken, die sich an den Übergangsstellen von den Flachbereichen zu den kegelstumpfartigen Abschnitten und den zylinderartigen Abschnitt bilden, stellen die Bereiche höchster Struktursteifigkeit dar. Die hohe Struktursteifigkeit dieser Bereiche wird für die Aufnahmegehäusebefestigung ausgenutzt, indem die abgeflachten Abschnitte um ca. 0,1 bis 0,5mm konkav nach innen gewölbt sind und sich die Schenkel der Aufnahmegehäuse bis zu den Raumecken erstrekken. Dadurch ist gewährleistet, daß die Aufnahmegehäuse an diesen Raumecken aufliegen. Hierbei erweist es sich weiter als vorteilhaft, daß durch die Montage der Aufnahmegehäuse ein Ausgleich der konkaven Ausformungen der abgeflachten Abschnitte erreicht ist, unter Ausbildung einer entsprechenden Vorspannung in dem Motorgehäuse. Dadurch ist weiter gewährleistet, daß die bei der Befestigung der Aufnahmegehäuse nach außen gezogenen Flächen der abgeflachten Abschnitte als Federvorspannelement wirken. Als weiter vorteilhaft für die Befestigung eines Aufnahmegehäuses auf dem dünnwandigen Motorgehäuse erweist sich, daß die Aufnahmegehäuse an das Motorgehäuse angenietet sind. Durch diese formschlüssige Verbindung durch Niete ist eine sichere Verbindung auch unter stetigen Vibrationen gegeben. Die Halterungsausnehmungen für die Aufnahmegehäuse und die in dieser Halterungsausnehmungen übergehenden Kühlluftöffnungen im Bereich der abgeflachten Abschnitte sind in ihren Abmaßen so gewählt, daß der Übergang von einem kegelstumpfartigen Abschnitt zu einem abgeflachten Abschnitt in Vertikalrichtung auch flachabschnittsseitig zumindest stegartig geschlossen ausgebildet ist. Auch diese Ausgestaltung ist besonders von Vorteil, da hierdurch die hohe Struktursteifigkeit im Bereich der Aufnahmegehäuse gewährleistet ist. In einer vorteilhaften Weiterbildung des Erfindungsgegenstandes ist vorgesehen, daß ein Befestigungsabschnitt eines Aufnahmegehäuses in Zusammenwirkung mit einem zugeordneten abgeflachten Abschnitt einen Fuß eines Entstörelementes klemmkontaktiert. Die Positionierung des weitestgehend rechteckigen Aufnahmegehäuses erfolgt durch eine entsprechend ausgestanzte Teilfläche, die seitliche Nuten aufweisen, in denen seitliche Rippen des Aufnahmegehäuses eintauchen. In den Schenkeln bzw. Befestigungsabschnitten eines Aufnahmegehäuses ist zumindest eine Bohrung angebracht, die für die Fixierung eines Entstörelementes vorzugsweise eines Kondensators gedacht ist. Hierzu ist weiter vorgesehen, daß in dem Befestigungsabschnitt eine Aufnahmenut für den Fuß ausgebildet ist. Somit kann ein Fuß des Entstörelementes vor der Aufnahmegehäusemontage durch die Bohrung geführt, umgebogen und in die Nut eingelegt werden. Die Höhe der Nut ist hierbei geringer als der Durchmesser des Entstörelementfußes. Die an das Aufnahmegehäuse angrenzenden Teilflächen des abgeflachten Abschnittes wirken als metallisches Federelement, welches für eine ausreichende Festigkeit der Klemmverbindung sorgt, sobald das Aufnahmegehäuse mit Niete befestigt wird. Dieses Verfahren ist kostengünstig, da weitere Anschlag- und Befestigungsteile entfallen sowie Aufnahmegehäuse- und Entstörelementmontage in einem Schritt erfolgen kann. Bei einem schnellaufenden Elektromotor der in Rede stehenden Art, wobei das Motorgehäuse über Befestigungsstege an einem Lageraufnahmeteil befestigt ist, wird vorgeschlagen, daß die Befestigungsstege abgewinkelte Begrenzungswände aufweisen zur Ausbildung eines T- oder U-förmigen Profils. Bevorzugt werden hierbei vier Befestigungsstege gleichmäßig verteilt über den Umfang an dem Motorgehäuse angeordnet. Diese Befestigungsstege weisen hochgestellte Wandungen zur Erhöhung der Steifigkeit auf. Hierzu ist bei einem schnellaufenden Elektromotor der in Rede stehenden Art, wobei das Motorgehäuse endseitig im Bereich der Befestigungsstege einen nach außen umgebogenen, umlaufenden Randbereich aufweist, vorgesehen, daß der Randbereich durch die abgewinkelten Begrenzungswände der Befestigungsstege unterbrochen ist derart, daß die Wände in den eigentlichen Zylinderbereich des Motorgehäuses einlaufen. Somit setzen sich die abgewinkelten Begrenzungswände der Befestigungsstege auch in dem umlaufenden Randbereich fort. Zur Verbesserung der Strömungsablenkung im Bereich der Befestigungsstege wird vorgeschlagen, daß ein Befestigungssteg im Querschnitt hinsichtlich der Begrenzungswände unsymmetrisch ausgebildet ist. Weiter wird vorgeschlagen, daß der umlaufende Randbereich kreisabschnittsförmig zwischen den Befestigungsstegen ausgebildet ist. Bedingt durch die unsymmetrische Ausgestaltung des Befestigungssteg-Querschnittes ergibt sich, daß der Randbereich in einer Projektion quer zur Rotorwelle einen spitzen Winkel mit einer senkrecht zu der Rotorwelle verlaufenden Ebene einschließt. Bevorzugt wird eine Ausgestaltung, bei welcher eine Begrenzungswand zur leitblechartigen Wirkung einen Winkel von 30 bis 50° mit einer durch die Rotorwelle gehenden Querebene einschließt. Alternativ kann die Ausbildung so gewählt sein, daß jeweils eine strömungsabgewandte Seite eine in Strömungsrichtung abgewinkelte Begrenzungswand aufweist, die in einem Winkel von 30 bis 50° zur Rotorachse steht. Hierzu wird weiter vorgeschlagen, daß eine in Rotorwellenrichtung gemessene Höhe der Begrenzungswand etwa 70 bis 90% der Breite der Auslaßöffnung entspricht. In einer vorteilhaften Weiterbildung des Erfindungsgegenstandes ist vorgesehen, daß die in Rotorwellenrichtung gemessene Höhe der anderen Begrenzungswand mindestens 2mm beträgt. Die verlängerten Begrenzungswände versteifen das Motorgehäuse und unterstützen gleichzeitig die Luftführung durch eine luftführende Gestaltung des Lageraufnahmeteiles. Durch den sich bildenden Spaltquerschnitt wird der Strömungsdruckverlust deutlich gesenkt. Die Befestigung von Lageraufnahmeteil und Motorgehäuse erfolgt an den vier Befestigungsstegen des Motorgehäuses, in dem diese Stege 0,1 bis 0,3mm konkav ausgebildet sind und die beiden Komponenten miteinander durch materialeigene Vernietung verbunden werden. Vorteilhafterweise erfolgt diese materialeigene Vernietung nach dem Verfahren der Stanzvernietung. In einer vorteilhaften Weiterbildung eines schnellaufenden Elektromotors der in Rede stehenden Art, wobei das Motorgehäuse an dem kollektorseitigen Ende eine topfartige Aufnahme für ein Rotorwellenkugellager ausbildet, wird vorgeschlagen, daß in der Aufnahme zur Abstützung im Topfboden eine Wellscheibe angeordnet ist, welche das Kugellager in Rotorwellenrichtung vorspannt. Hier werden bevorzugt Rillenkugellager eingesetzt, welche durch eine Wellscheibe axial gegeneinander vorgespannt werden. Diese Vorspannung sorgt für eine Ausrichtung der Kugellageraußenringe zur Rotorwelle und den Innenringen. Dies ist insbesondere dadurch ermöglicht, da zwischen Kugellageraußenring und Motorgehäuse ein Spalt von bis zu 0,05mm vorgesehen ist. Zur lagengerechten Positionierung des Stators in dem Motorgehäuse ist vorgesehen, daß das Motorgehäuse in seinem zylindrischen Bereich sich in Rotorwellenrichtung erstreckende Längssicken aufweist. Diese Längssicken greifen in entsprechende nutförmige Einbuchtungen des Stators ein und gewährleisten sowohl eine Positionierung des Stators als auch eine Verdrehsicherung desselben. Durch die exakte Positionierung ist es möglich, bei der Montage den Stator automatisch mit dem Aufnahmegehäuse für die Kohlebürsten zu kontaktieren. Vorteilhaft ist es, federnde Kontaktelemente am Stator anzubringen, die einen sicheren elektrischen Kontakt zu einem entsprechenden Kontaktelement am Aufnahmegehäuse der Kohlebürsten herstellen und aufgrund ihrer federnden Eigenschaften Toleranzen ausgleichen können. Auch hier wird auf die noch nicht veröffentlichte Europa-Anmeldung der Anmelderin verwiesen. Eine weitere Fixierung des Stators ist dadurch erreicht, daß an dem Motorgehäuse nach innen ragende Anschlagvorsprünge ausgebildet sind zur axialen Positionierung des Stators in dem Motorgehäuse. Diese Anschlagvorsprünge sind bevorzugt als eingedrückte Anschlagsicken ausgebildet, die in Gebläserichtung offen sind. Hierdurch wird eine köcherseitige Fixierung des Stators erreicht. Weiter wird hierzu vorgeschlagen, daß der Stator mit dem Motorgehäuse in seinen kreisabschnittsförmigen Bereichen verklebt ist. Zur Drehmomentübertragung vom Rotor auf das Gebläserad wird bei einem schnellaufenden Elektromotor der in Rede stehenden Art, wobei das Gebläserad eine scheibenförmige Gebläseradunterwand aufweist, vorgeschlagen, daß die Unterwand zwischen zwei konkav gewölbten Scheibenteilen, welche drehfest an der Rotorwelle gehaltert sind eingefaßt ist. Hierdurch wird eine Federvorspannung erzeugt. Die konkave Wölbung beträgt bevorzugt 0,1 bis 0,3mm. Schließlich ist vorgesehen, daß die Scheiben über eine in Axialrichtung auf die Rotorwelle aufgeschraubten Mutter zur Halterung an der Rotorwelle gegen ein Rotorwellenlager verspannt sind. Somit sind das Gebläserad und die Scheiben gegen den Kugellagerinnenring des Rotorwellenlagers fixiert. Die Mutter wird in der Art verschraubt, ohne daß ein Gegenmoment am gegenüberliegenden Rotorende aufgebracht werden muß.

Nachstehend ist die Erfindung anhand der beigefügten Zeichnung, welche lediglich ein Ausführungsbeispiel darstellt, näher erläutert. Es zeigt:
- Figur 1: einen erfindungsgemäßen schnellaufenden Elektromotor mit einem Rotor und einem Stator und einem auf einer Rotorwelle befestigten Gebläserad zur Bildung einer Motor-Gebläse-Einheit in einer geschnittenen Darstellung, wobei der Schnitt durch diese Einheit versetzt verläuft;

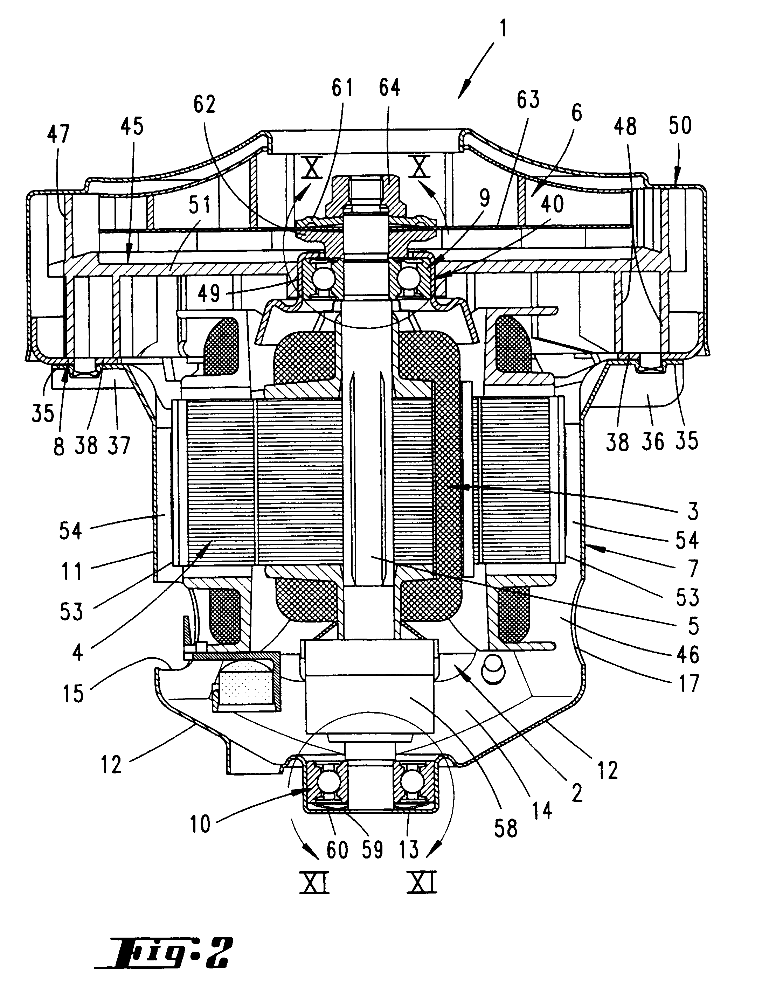

- Figur 2: eine weitere Schnittdarstellung der Motor-Gebläse-Einheit gemäß Figur 1;
- Figur 3: eine Einzeldarstellung eines Motorgehäuses in Draufsicht;
- Figur 4: den Schnitt gemäß der Linie IV-IV in Figur 3 durch das Motorgehäuse;
- Fig. 4a: den Schnitt gemäß der Linie IVa-IVa in Figur 3 durch den Bereich eines Befestigungssteges;
- Figur 5: eine perspektivische Einzeldarstellung eines Lageraufnahmeteiles;
- Figur 6: die Draufsicht auf das Lageraufnahmeteil;
- Figur 7: eine weitere Draufsicht auf das Lageraufnahmeteil, wobei hier das Motorgehäuse auf diesem Lageraufnahmeteil fixiert ist;
- Figur 8: eine schematische Darstellung eines Statorschnittes mit in strichpunktierter Linienart dargestellter Motorgehäusewand;
- Figur 9: eine starke Herausvergrößerung des Bereiches IX-IX in Figur 8, jedoch bei geschnittenem Motorgehäuse;
- Figur 10: eine Herausvergrößerung des Bereiches X-X in Figur 2;

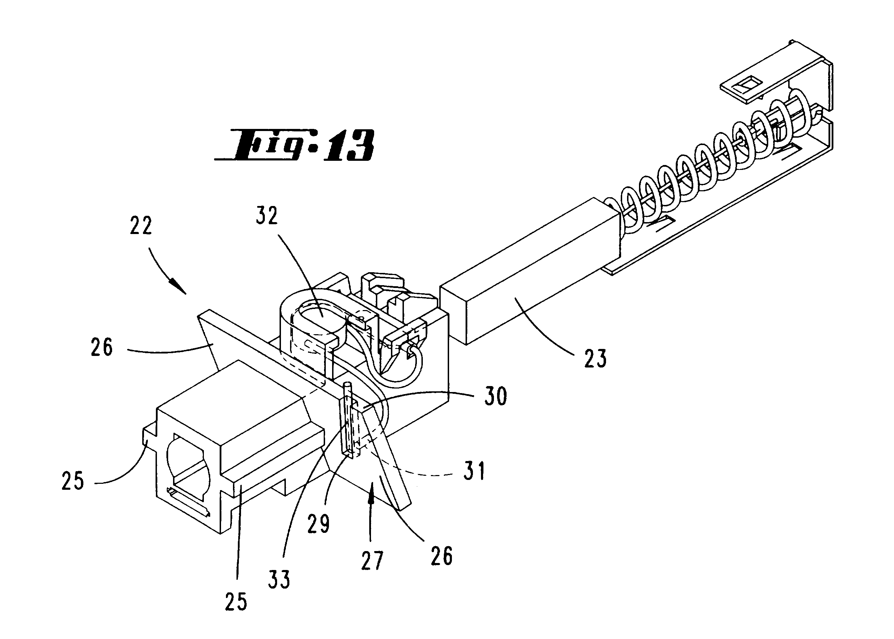

- Figur 11: eine weitere Herausvergrößerung, den Bereich XI-XI in Figur 2 betreffend;
- Figur 12: den Schnitt gemäß der Linie XII-XII in Figur 4;
- Figur 13: eine perspektivische Einzeldarstellung eines Aufnahmegehäuses für Kohlebürsten.

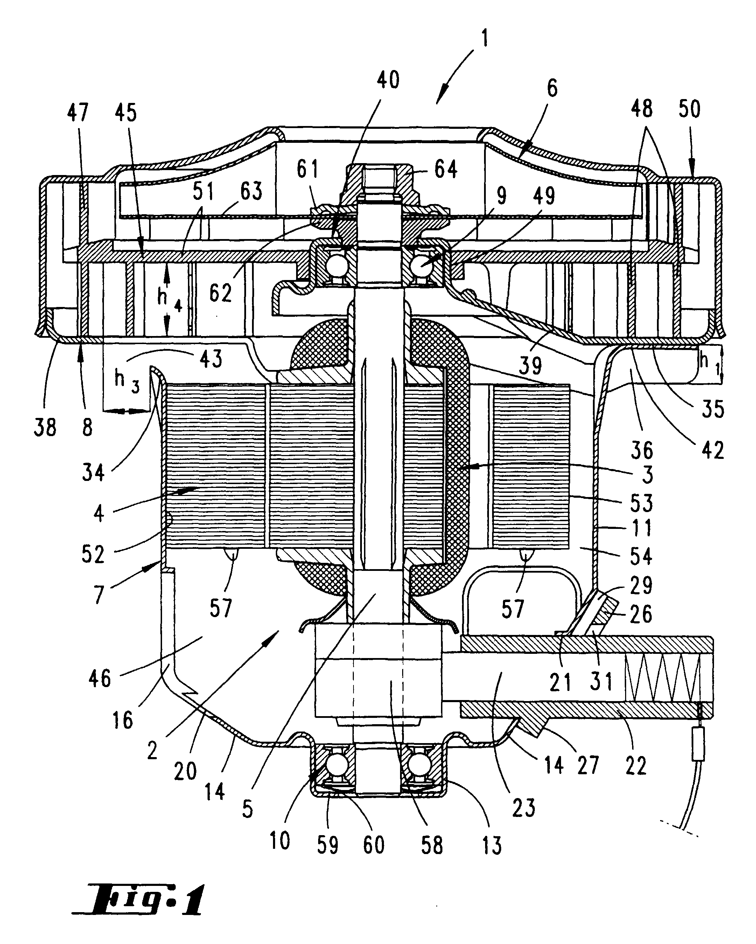

Dargestellt und beschrieben ist zunächst mit Bezug zu Figur 1 eine Motor-Gebläse-Einheit 1, welche sich im wesentlichen aus einem schnellaufenden Elektromotor 2 mit einem Rotor 3 und einem Stator 4 und einem auf einer Motorwelle 5 befestigten Gebläserad 6 zusammensetzt.

Der Elektromotor 2 ist zum einen in einem Motorgehäuse 7 und zum anderen im Bereich eines Lageraufnahmeteiles 8 in Rotorwellenkugellager 9 und 10 in den Endbereichen seiner Rotorwelle 5 gelagert. An dem dem Motorgehäuse 7 abgewandten Endbereich ist das Gebläserad 6 drehfest mit der Rotorwelle 5 verbunden.

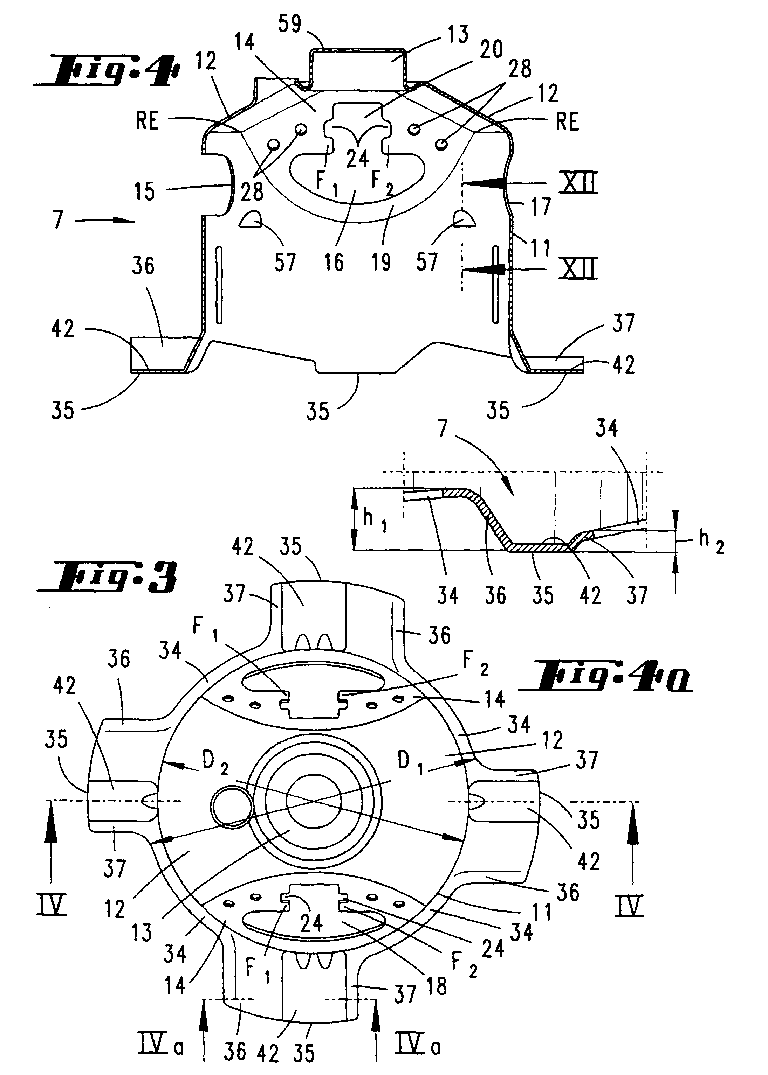

Das Motorgehäuse 7 ist nachstehend anhand der Figuren 3 und 4 näher beschrieben. Dieses weist einen im wesentlichen zylindrischen Bereich 11 auf, welcher - bezogen auf den Einbauzustand - kollektorseitig in einen kegelstumpfartigen Abschnitt 12 übergeht. Die Höhe des kegelstumpfartigen Abschnittes 12 entspricht in Rotorwellenrichtung gemessen etwa einem Viertel der Gesamthöhe des Motorgehäuses 7, wobei in einem Querschnitt gemäß Figur 4 der kegelstumpfartige Abschnitt 12 um ca. 30° geneigte Flanken aufweist.

Im Bereich der Kegelstumpfspitze ist eine topfartige Aufnahme 13 für das Rotorwellenkugellager 10 ausgebildet.

Der kegelstumpfartige Abschnitt 12 ist von zwei symmetrisch zueinander angeordneten abgeflachten Abschnitten 14 unterbrochen. Letztere erstrecken sich etwa vom Fußbereich der topfartigen Aufnahme 13, über den kegelstumpfartigen Abschnitt 12 bis in den zylindrischen Bereich 11 hinein. Die in Rotorwellenrichtung gemessene Höhe dieser abgeflachten Abschnitte 14 entspricht etwa einem Zweifachen der Kegelstumpfhöhe. Die Ausrichtung dieser abgeflachten Abschnitte 14 ist so gewählt, daß ein Winkel zu einer quer zur Rotorwellenachse verlaufenden Ebene von ca. 60° eingeschlossen wird.

Das Motorgehäuse 7 weist kollektorseitig insgesamt vier Kühlluftöffnungen 15 bis 18 auf, wobei die Kühlluftöffnungen 15 und 17 im zylindrischen Bereich 11 in Rotorwellenrichtung vor Übergang in den kegelstumpfartigen Abschnitt 12 angeordnet sind. Die weiteren Kühlluftöffnungen 16 und 18 sind jeweils einem abgeflachten Abschnitt 14 zugeordnet, wobei die Ränder der Kühlluftöffnungen 16 und 18 beabstandet sind zu den Übergangsbereichen von abgeflachtem Abschnitt 14 zum zylindrischen Abschnitt 11 bzw. zum kegelstumpfartigen Abschnitt 12.

Hieraus ergibt sich in einer Projektion quer zur Rotorwelle 5, daß ein unterer, dem kegelstumpfartigen Abschnitt 12 abgewandter Rand kreisabschnittsförmig, entsprechend dem Übergangsbereich zwischen dem abgeflachten Abschnitt 14 und dem zylindrischen Abschnitt 11 ausgebildet ist, dies mit einem Abstand zu dieser Übergangslinie von ca. 5mm. Ein oberer, parallel zu einer quer zur Rotorwelle 5 verlaufenden Ebene ausgebildeter Rand verläuft unterhalb des Übergangsbereiches vom zylindrischen Abschnitt 11 zum kegelstumpfartigen Abschnitt 12. Der Übergang vom unteren kreisabschnittsförmigen Rand der Kühlluftöffnung 16 bzw. 18 zum oberen gerade verlaufenden Rand ist stark verrundet, wobei die Abmaße so gewählt sind, daß stets ein genügend in seiner Breite dimensionierter Steg 19 zwischen der Kühlluftöffnung 16 bzw. 18 und den Übergangsbereichen zwischen den einzelnen Motorgehäuseaußenflächen gegeben ist.

Die Kühlluftöffnungen 16 und 18 in den abgeflachten Abschnitten 14 und die Kühlluftöffnungen 15 und 17 in dem zylindrischen Bereich 11 sind jeweils um 180° versetzt angeordnet.

Die in den abgeflachten Abschnitten 14 vorgesehenen Kühlluftöffnungen 16 und 18 gehen jeweils in eine Halterungsausnehmung 20, 21 für ein Aufnahmegehäuse 22 für Kohlebürsten 23 über. Diese Halterungsausnehmungen 20 und 21 sind als ausgestanzte Teilflächen ausgebildet und weisen seitliche Nuten 24 auf, in denen seitliche Rippen 25 des Aufnahmegehäuses 22 eintauchen.

Die Raumecken RE, die sich an den Übergangsstellen von der planen Fläche des abgeflachten Abschnittes 14 zu dem kegelstumpfartigen Abschnitt 12 und dem zylindrischen Bereich 11 bilden, stellen die Bereiche höchster Struktursteifigkeit dar. Die hohe Struktursteifigkeit dieser Bereiche wird für die Befestigung der Aufnahmegehäuse 22 ausgenutzt, indem die plane Fläche eines jeden abgeflachten Abschnittes 14 um ca. 0,1 bis 0,5mm konkav nach innen gewölbt ist, wobei sich die Schenkel 26 eines Befestigungsabschnittes 27 des Aufnahmegehäuses 22 bis zu den Raumecken RE im Einbauzustand erstrecken. Dadurch ist gewährleistet, daß die Aufnahmegehäuse 22 an den Raumecken RE aufliegen.

Die konkave Ausformung der planen Flächen der abgeflachten Abschnitte 14 ist im unbeeinflußten Zustand, d. h. vor einer Montage der Aufnahmegehäuse 22 gegeben. Durch eine Montage der Aufnahmegehäuse 22 ist ein Ausgleich der konkaven Ausformung erreicht, unter Ausbildung einer entsprechenden Vorspannung in dem Motorgehäuse 7. Die bei der Befestigung nach außen gezogenen abgeflachten Abschnitte 14 wirken als Federvorspannelemente.

Die Befestigung der Aufnahmegehäuse 22 auf dem dünnwandigen Motorgehäuse 7 erfolgt über eine formschlüssige Verbindung durch Niete, welche auch unter stetigen Vibrationen eine sichere Verbindung darstellen. Das Motorgehäuse 7 weist hierzu im Bereich seiner abgeflachten Abschnitte 14 beidseitig der Halterungsausnehmungen 20 bzw. 21 jeweils zwei Durchtrittsöffnungen 28 für die Niete auf.

Der an dem Aufnahmegehäuse 22 für die Kohlebürste 23 vorgesehene Befestigungsabschnitt 27 besitzt im Bereich eines Steges 26 eine Aufnahmenut 29. Diese Aufnahmenut 29 ist - bezogen auf eine Ausrichtung nach Montage des Aufnahmegehäuses 22 an dem Motorgehäuse 7 - randoffen in Richtung auf den abgeflachten Abschnitt 14 des Motorgehäuses 7 ausgebildet und erstreckt sich von einem oberen Randbereich 30 bis etwa zur Mitte der höhenmäßigen Erstreckung des Steges 26. In dem dem oberen Randbereich 30 abgewandten Endbereich der Aufnahmenut 29 ist eine den Steg 26 durchtretende, in diesen Endbereich der Aufnahmenut 29 einlaufende Bohrung 31 vorgesehen.

Die Aufnahmenut 29 und die Bohrung 31 sind für die Fixierung eines Entstörelementes 32, vorzugsweise eines Kondensators, gedacht. Ein Fuß 33 des Entstörelementes 32 wird vor der Aufnahmegehäusemontage durch die Bohrung 31 geführt, umgebogen und in die Aufnahmenut 29 eingelegt. Die Höhe der Aufnahmenut 29 - gemessen parallel zur Längserstreckung des Aufnahmegehäuses 22 - ist hierbei geringer bemessen als der Durchmesser des Fußes 33 des Entstörelementes 32. Bei einer Montage des Aufnahmegehäuses 22 an das Motorgehäuse 7 wird der Fuß 33 des Entstörelementes 32 in Zusammenwirkung mit dem dem Befestigungsabschnitt 27 zugeordneten abgeflachten Abschnitt 14 des Motorgehäuses 7 klemmkontaktiert. Hierbei wirken die im Zwickel zwischen den Kühlluftöffnungen 16 bzw. 18 und den Nuten 24 der Halterungsausnehmungen 22 bzw. 21 ausprägten Teilflächen F1 und F2 als metallisches Federelement, welches für eine ausreichende Festigkeit der Klemmverbindung sorgt, sobald das Aufnahmegehäuse 22 über Niete mit dem Motorgehäuse 7 befestigt wird. Dies erweist sich insofern als vorteilhaft, da weitere Anschlag- und Befestigungsteile entfallen sowie Aufnahmegehäuse- und Entstörelementmontage in einem Schritt erfolgen kann.

Die im Bereich der abgeflachten Abschnitte 14 zu befestigenden Aufnahmegehäuse 22 bestehen aus einem elektrisch isolierenden Material, wie bspw. Duroplast. Wie bereits erwähnt ist ein solches Aufnahmegehäuse für Kohlebürsten aus einer noch nicht veröffentlichten europäischen Patentanmeldung der Anmelderin bekannt.

Das Motorgehäuse 7 weist endseitig, d. h. an dem freien Endbereich des zylindrischen Abschnittes 11, einen nach außen umgebogenen, umlaufenden Randbereich 34 auf, dessen Durchmesser D1 um einen Faktor 1,05 bis 1,15, bevorzugt 1,1 größer ist als der Außendurchmesser D2 des Motorgehäuses 7.

Wie bereits eingangs erwähnt, wird das Motorgehäuse 7 an dem Lageraufnahmeteil 8 befestigt, wozu das Motorgehäuse 7 endseitig, d. h. dem Randbereich 34 zugeordnet, vier gleichmäßig über den Umfang verteilte Befestigungsstege 35 aufweist. Diese Befestigungsstege 35 erstrekken sich quer zur Ausrichtung des gesamten Motorgehäuses 7. Aus der Schnittdarstellung in Figur 4a ist zu erkennen, daß ein jeder Befestigungssteg 35 abgewinkelte Begrenzungswände 36, 37 aufweist, zur Ausbildung eines im wesentlichen U-förmigen Profils. Diese hochgestellten Begrenzungswände 36 und 37 dienen zur Erhöhung der Steifigkeit.

Der umlaufende Randbereich 34 wird durch die abgewinkelten Begrenzungswände 36 und 37 der Befestigungsstege 35 unterbrochen derart, daß die Begrenzungswände 36 und 37 in den eigentlichen zylindrischen Bereich 11 des Motorgehäuses 7 einlaufen.

Wie weiter insbesondere aus Figur 4a zu erkennen, ist ein Befestigungssteg 35 im Querschnitt hinsichtlich der Begrenzungswände 36 und 37 unsymmetrisch ausgebildet, wobei eine auf einer strömungsabgewandten Seite angeordnete Begrenzungswand 36 zur leitblechartigen Wirkung einen Winkel von 30 bis 50°, in dem gezeigten Ausführungsbeispiel ca. 45°, mit einer durch die Rotorwelle 5 verlaufenden Querebene einschließt. Weiter sind die Begrenzungswände 36 und 37 auch hinsichtlich ihrer Höhenerstreckung - parallel zur Rotorwelle 5 gemessen - unterschiedlich ausgebildet. Die Höhe h1 der leitblechartigen Begrenzungswand 36 entspricht etwa der doppelten Höhe h2 der anderen Begrenzungswand 37, wobei die Höhe h2 der letzteren mindestens 2mm beträgt. In dem gezeigten Ausführungsbeispiel mißt die leitblechartige Begrenzungswand 36 ca. 9mm und die andere Begrenzungswand ca. 4mm.

Bedingt dadurch, daß die Begrenzungswände 36 und 37 in den umlaufenden Randbereich 34 einlaufen, ergibt sich, daß dieser Randbereich 34 in einer Projektion quer zur Rotorwelle 5 einen spitzen Winkel von 10 bis 15° mit einer senkrecht zu der Motorwelle 7 verlaufenden Ebene einschließt.

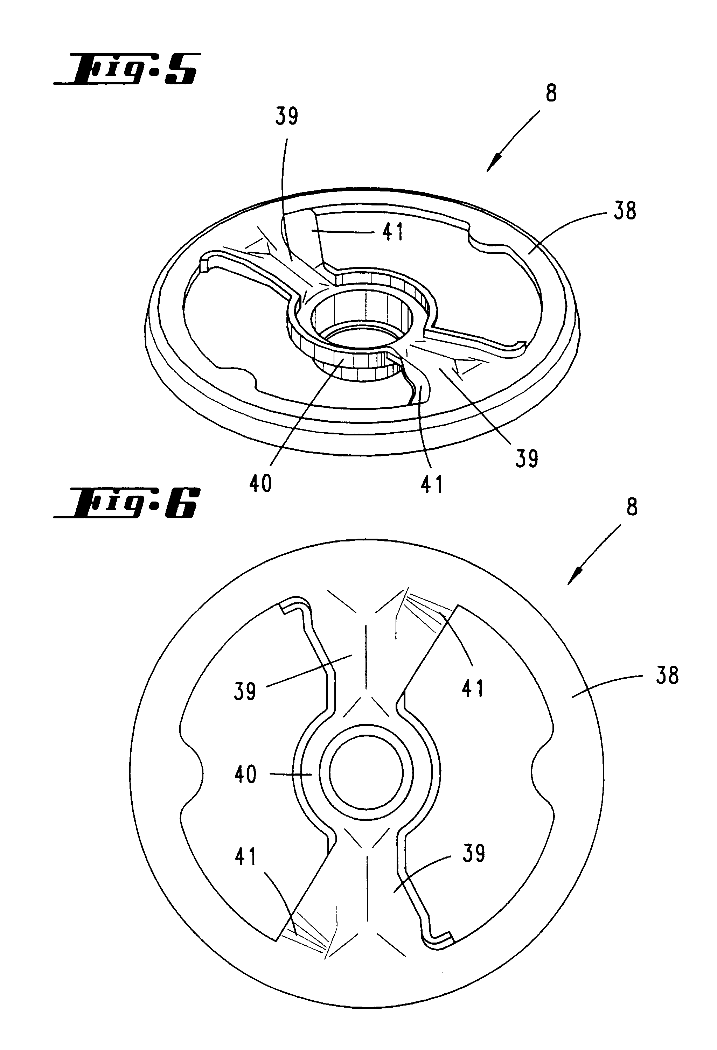

Das insbesondere in den Figuren 5 und 6 dargestellte Lageraufnahmeteil 8 ist, wie bereits eingangs erwähnt, aus einer noch nicht veröffentlichten Anmeldung der Anmelderin bekannt. Dieses Lageraufnahmeteil 8 setzt sich im wesentlichen zusammen aus einem Ringbereich 38 und zwei Stegen 39, die die Verbindung zwischen dem Ringbereich 38 und einer Lagerstelle 40 herstellen. Die Stege 39 sind asymmetrisch aufgebaut, indem die strömungsabgewandte Seite eines jeden Steges 39 mit einer leitblechartigen Abwinkelung 41 versehen ist, wodurch zum einen eine Versteifung der Stege 39 bewirkt ist. Zum anderen lassen diese Abwinklungen 41 auch die Luftströmung vorteilhaft zirkulierend ausströmen, so daß das Motorgehäuse 7 durch eine Drallströmung umspült wird. Die Stege 39 und die Lagerstelle 40 teilen den durch den Ringbereich 38 gebildeten Innenraum in zwei Luftdurchtrittsbereiche, deren Grundrißfläche so groß gewählt ist, daß die durch diese Bereiche strömende Luft teilweise in den Motorraum strömt und teilweise außerhalb am Motorgebläse vorbeigeführt wird.

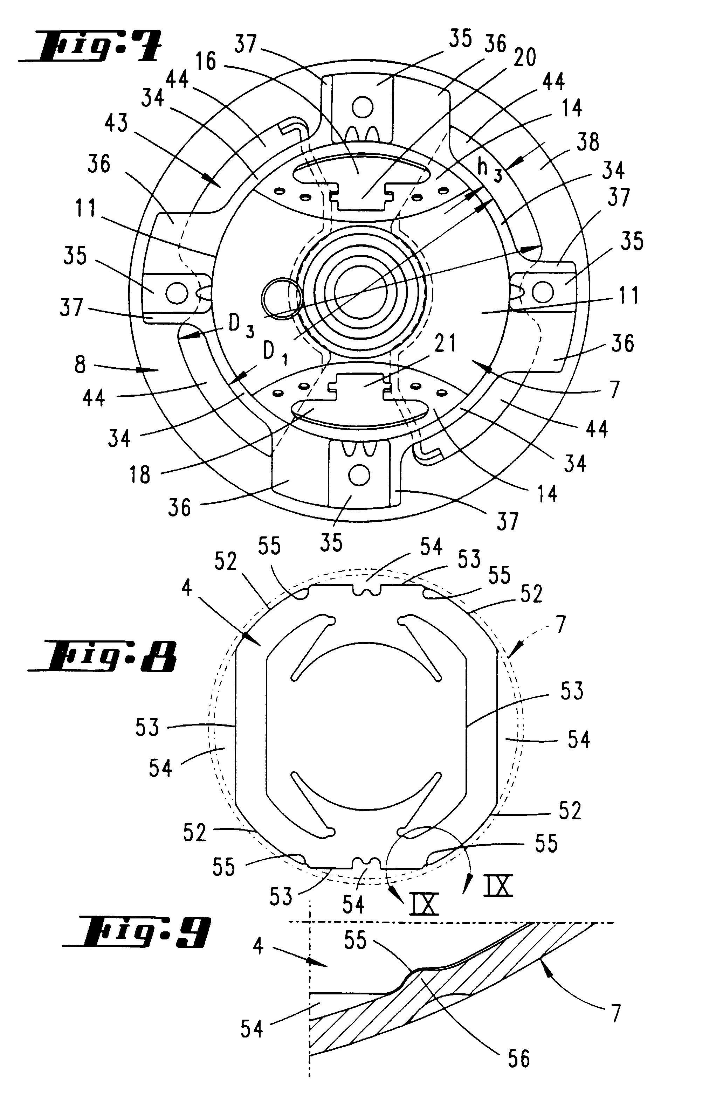

Die Befestigung des Motorgehäuses 7 an dem Lageraufnahmeteil 8 erfolgt im Bereich des U-Steges 42 eines jeden Befestigungssteges 35, wobei sich diese U-Stege 42 auf einer Oberseite des Ringbereiches 38 des Lageraufnahmeteiles 8 abstützen. Hierbei sind die Befestigungsstege 35 bzw. die U-Stege 42 um 0,1 bis 0,3mm konkav ausgebildet und werden mit dem Ringbereich 38 durch materialeigene Vernietung verbunden. Die Montageanordnung ist bspw. aus der Figur 7 in einer Draufsicht zu erkennen.

Weiter ist aus der zuletzt genannten Darstellung zu erkennen, daß sich zwischen dem Außendurchmesser D1 des Motorgehäuserandbereiches 34 und dem Innendurchmesser D3 des Lageraufnahmeteil-Ringbereiches 38 sich eine Auslaßöffnung 43 ausbildet. Letztere ist segmentiert durch die sich im wesentlichen radial erstreckenden Befestigungsstege 35 des Motorgehäuses 7. Hieraus ergeben sich Auslaßöffnungs-Segmente 44, welche im Grundriß kreisringabschnittsförmig ausgebildet sind.

Die Breite h3, gemessen zwischen den Durchmessern D1 und D3 steht in einem vorgewählten Verhältnis zur Höhe h1 der leitblechartigen Begrenzungswände 36 des Motorgehäuses 7. Hier ist vorgesehen, daß die Höhe h1 der Begrenzungswände 36 etwa 70 bis 90% der Breite h3 der Auslaßöffnung 43 entspricht. Die verlängerten Begrenzungswände 36 versteifen das Motorgehäuse 7 und unterstützen gleichzeitig die Luftführung durch die Abwinklungen des Lageraufnahmeteiles 8. Durch den sich bildenden Spaltquerschnitt wird der Strömungsdruckverlust deutlich gesenkt.

Zwischen dem auf der Rotorwelle 5 befestigtem Gebläserad 6 und dem Lageraufnahmeteil 8 ist an letzterem drehfest ein Diffusor 45 befestigt. Letzterer ist ebenfalls bekannt aus einer noch nicht veröffentlichten deutschen Patentanmeldung der Anmelderin.

Der Diffusor 45 erstreckt sich quer zur Rotorwelle 5 und weist auf der dem Motorraum 46 abgewandten Seite Diffusorleitelemente 47 und auf der dem Motorraum 46 zugewandten Seite Rückführschaufeln 48 auf. Die Befestigung des Diffusors 45 erfolgt im Bereich der Lagerstelle 40 des Lageraufnahmeteiles 8, wobei die Lagerstelle 40 eine entsprechend ausgeformte kreisrunde Axialöffnung 49 des Diffusors 45 durchtritt. Im Bereich der Stege 39 des Lageraufnahmeteiles 8 erfolgt die drehgesicherte Befestigung des Diffusors 45.

Diffusor 45 und Gebläserad 6 werden zusammen von einem Gebläsetopf 50 überdeckt, welcher randaußenseitig am Ringbereich 38 des Lageraufnahmeteiles 8 befestigt wird.

Der Diffusor 45 ist hierbei derart positioniert, daß seine Rückführschaufeln 48 ausgehend von einer Diffusorplatte 51 sich bis auf die dem Diffusor 45 zugewandte Oberfläche des Lageraufnahmeteiles 8 erstrecken. Somit entspricht ein Abstand h4 zwischen der Diffusorplatte 51 und der zwischen Lageraufnahmeteil 8 und Motorgehäuse 7 gebildeten Auslaßöffnung 43 einer Höhe der Rückführleitschaufeln 48.

Die Breite h3 der Auslaßöffnung 43 ist weiterhin so bemessen, daß diese 50 bis 70% der Höhe h4 entspricht.

Durch die gewählte Ausgestaltung wird der Arbeitsvolumenstrom geteilt derart, daß die Motorkühlluft teilweise das Motorgehäuse 7 durchströmt und teilweise außen an dem Motorgehäuse 7 nach Durchtritt durch die Auslaßöffnung 43 entlang geführt wird. Hieraus ergibt sich, daß bei gleichem Druckverlust die freien Querschnitte im Elektromotor 2 kleiner gewählt werden können und auch ein kleinerer Motorgehäusedurchmesser D2 ausreichend ist, womit eine kompakte Motor-Gebläse-Einheit 1 geschaffen ist.

Der in dem Motorgehäuse 7 angeordnete Stator 4 weist einen Querschnitt auf, welcher teilweise an die Innenkontur des Motorgehäuses 7 angepaßt ist und teilweise mit Abstand zu dem Motorgehäuse 7 verläuft. Ein solcher Statorquerschnitt ist aus der Figur 8 zu erkennen.

Der Stator 4 setzt sich zusammen aus vier dem Motorgehäuseumfang angepaßten Bereichen 52 und zwischen diesen sich erstreckenden gerade verlaufenden Bereichen 53 zusammen. Konkret ist die Ausbildung so gewählt, daß die angepaßten Bereiche 52 kreisabschnittsförmig verlaufen, wobei ein Radius dieser kreisabschnittsförmigen Bereiche 52 dem Radius der Motorgehäusewandung in diesem Bereich entspricht. Der Stator 4 wird derart innerhalb des Motorgehäuses 7 positioniert, daß der zylindrische Bereich 11 des Motorgehäuses 7 dem Stator 4 zugeordnet ist. Somit ergibt sich, daß der Radius der angepaßten Bereiche 52 etwa dem halben Durchmesser D2 abzüglich einer Wandstärke des Motorgehäuses 7 entspricht.

Diese vier kreisabschnittsförmigen Bereiche 52 sind umfangsaußenseitig jeweils durch die gerade verlaufenden Bereiche 53 verbunden.

Die Länge der angepaßten bzw. kreisabschnittsförmigen Bereiche 52 ist hierbei so gewählt, daß die Addition der Längen aller vier angepaßten Bereiche 52 etwa 35 bis 45% des Motorgehäuseumfangs entspricht.

Durch diese Ausgestaltung ist eine ausreichende Kühlung des Elektromotors 2 gewährleistet, da die vier kreisabschnittsförmigen Bereiche 52 einen flächigen wärmeleitenden Kontakt zum Motorgehäuse 7 schaffen.

Zwischen den gerade verlaufenden Bereichen 53 und der Motorgehäuse-Innenfläche sind bedingt durch diese Ausgestaltung Luftspalte 54 gebildet, wobei eine freie Querschnittsfläche in dem Motorgehäuse 7 zwischen dem Stator 4 und dem Rotor 3 bzw. zwischen dem Stator 4 und dem Motorgehäuse 7 etwa 0,2 bis 0,4 des Querschnittes der Auslaßöffnung 43 entspricht.

Die Kühlleistung wird somit erbracht durch einen unmittelbaren Anteil, welcher erzeugt wird durch den Motorkühlluftstrom zwischen Stator 4 und Rotor 3 sowie Stator 4 und Motortopf 7, und einem mittelbaren Anteil, der auf die Wärmeleitung vom Stator 4 zum Motorgehäuse 7 beruht. Das Motorgehäuse 7 wiederum wird durch den Hauptanteil des Arbeitsvolumenstromes über die gesamte Motorgehäuseoberfläche gekühlt. Das Motorgehäuse 7 bildet in dieser Funktion ein zylinderförmiges Kühlelement. Die erwähnte freie Querschnittsfläche in dem Motorgehäuse ist die maßgebende Größe für die Aufteilung des mittelbaren und unmittelbaren Kühlluftstromes.

Aufgrund der zusätzlichen Kühlleistung durch das Motorgehäuse sind die Kühlluftöffnungen 15 bis 18 minimiert für einen kleinen Motorkühlluftstrom, wodurch eine größere Struktursteifigkeit des Motorgehäuses 7 im Bereich der Aufnahmegehäuse 22 für die Kohlebürsten 23 und der topfartigen Lageraufnahme 13 erreicht ist, da der Übergang von der topfartigen Aufnahme 13 zum zylindrischen Bereich 11 des Motorgehäuses 7 kegelstumpfartig ausgebildet ist.

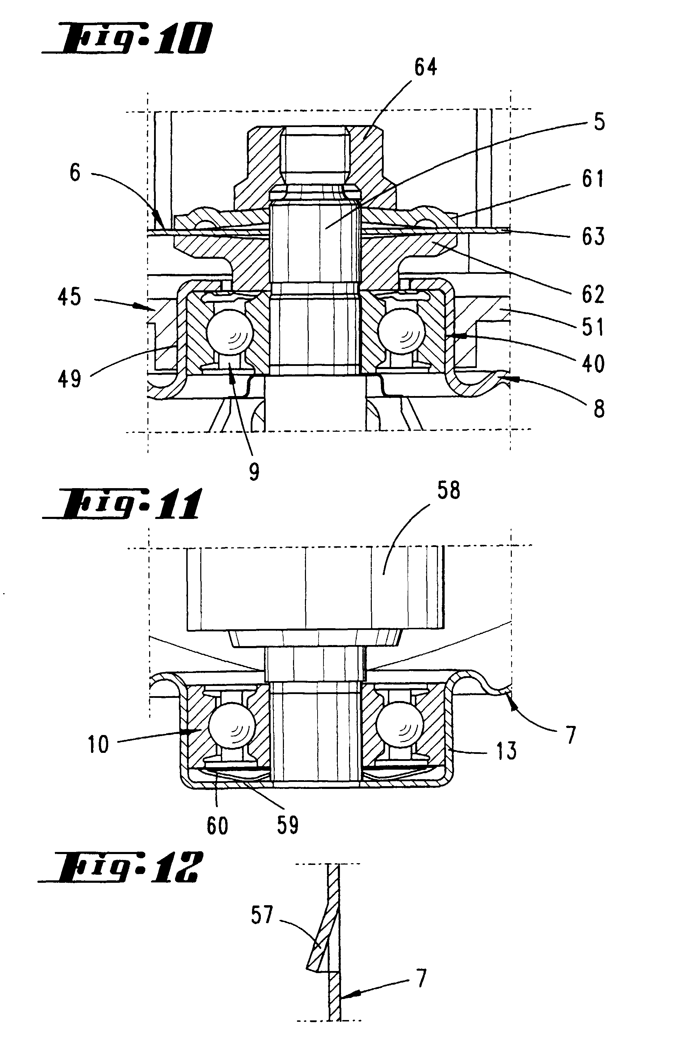

Wie weiter aus den Figuren 8 und 9 zu erkennen, weist der Stator 4 im Übergang von einem kreisabschnittsförmigen Bereich 52 zum gerade verlaufenden Bereich 53 eine in Rotorwellenrichtung verlaufende, nutförmige Einbuchtung 55 auf, zur Zusammenwirkung mit einer in den Innenraum des Motorgehäuses 7 ragenden Längssicke 56 desselben. Es sind insgesamt 4 solcher nutartigen Einbuchtungen 55 im Bereich der Außenfläche des Stators 4 vorgesehen, wobei jeweils zwei Einbuchtungen 55 einem gerade verlaufenden Bereich 53 zugeordnet sind.

Die erwähnten Längssicken 56 sind in dem zylindrischen Bereich 11 des Motorgehäuses 7 vorgesehen und erstrekken sich in Rotorwellenrichtung. Die Längssicken 56 sind durch Eindrückungen des Motorgehäuses 7 gebildet. Diese, in die entsprechenden nutartigen Einbuchtungen 55 des Stators 4 eingreifenden Längssicken 56 dienen sowohl zur Positionierung des Stators 4 als auch zur Gewährleistung einer Verdrehsicherheit desselben. Durch die exakte Positionierung ist es möglich, bei der Montage den Stator 4 automatisch mit den Aufnahmegehäusen 22 zu kontaktieren. Vorteilhaft ist es, federnde Kontaktelemente am Stator 4 anzubringen, die einen sicheren elektrischen Kontakt zu einem entsprechenden Kontaktelement am Aufnahmegehäuse 22 herstellen und aufgrund ihrer federnden Eigenschaften Toleranzen ausgleichen können.

Eine aufnahmegehäuseseitige Fixierung des Stators 4 ist erreicht durch nach innen ragende Anschlagvorsprünge 57 an dem Motorgehäuse 7. Weiter ist hierdurch eine axiale Positionierung des Stators 4 in dem Motorgehäuse 7 gegeben. Diese Anschlagvorsprünge 57 sind als eingedrückte Anschlagsicken ausgebildet, welche in Gebläserichtung offen sind (vgl. hierzu Figur 12).

Gebläseseitig wird die Fixierung durch eine Verklebung von Stator 4 und Motorgehäuse 7 auf den vier kreisabschnittsförmigen Bereichen 52 gewährleistet.

Wie bereits eingangs erwähnt, bildet das Motorgehäuse 7 an dem dem Kollektorabschnitt 58 zugewandten Ende eine topfartige Aufnahme 13 aus. Letztere dient zur Aufnahme des einen Rotorwellenkugellagers 10. Dieses stützt sich am Topfboden 59 über eine Wellscheibe 60 ab, womit das Rotorwellenkugellager 10 in Rotorwellenrichtung vorgespannt ist. Die Rillenkugellager werden durch die Wellscheibe 60 axial gegeneinander vorgespannt, wobei diese Vorspannung für eine Ausrichtung der Kugellageraußenringe zur Rotorwelle 5 und den Innenringen sorgt. Dies ist dadurch ermöglicht, da zwischen Kugellageraußenring und Aufnahme 13 ein Spalt von bis zu 0,05mm vorgesehen ist.

Die Drehmomentübertragung vom Rotor 3 auf das Gebläserad 6 erfolgt mittels zweier Scheiben 61 und 62, die jeweils zur Anlagefläche, welche durch eine scheibenförmige Gebläseradunterwand 63 gebildet ist, konkav ausgebildet sind. Diese Scheiben 61 und 62 sind hierbei drehfest an der Rotorwelle 5 gehaltert. Durch die konkave Ausgestaltung wird eine Federvorspannung erzeugt, wobei die konkave Wölbung zwischen 0,1 und 0,3mm beträgt.

Die Scheiben 61 und 62 werden über eine in Axialrichtung auf die Rotorwelle 5 aufgeschraubte Mutter 46 zur Halterung der Scheiben 61 und 62 und des zwischen diesen klemmgehalterten Gebläserades 6 an der Rotorwelle 5 gegen das zweite Rotorwellenlager 9 verspannt. Die Verschraubung mittels der Mutter 64 erfolgt hierbei derart, daß kein Gegenmoment am gegenüberliegenden Rotorende aufgebracht werden muß.

## Patentansprüche

1. Schnellaufender Elektromotor (2) mit einem Rotor (3) und einem Stator (4) und einem auf einer Rotorwelle (5) befestigten Gebläserad (6), wobei durch eine Umlenkung die durch das Gebläserad (6) gelieferte Motorkühlluft teilweise den Motor (2) durchströmt und teilweise außen an einem im wesentlichen zylindrischen Motorgehäuse (7) entlangströmt, wobei die Umlenkung durch einen Diffusor (45) in Zusammenwirkung mit einem Gebläsetopf (50) erreicht ist und wobei der Diffusor (45) eine Diffusorplatte (51) aufweist, an welcher einem Motorraum (46) zugewandte Rückführschaufeln (48) ausgebildet sind und zugeordnet dem Diffusor (45) eine im wesentlichen kreisringförmige Auslaßöffnung (43) zur Führung der Kühlluft außen an dem Motorgehäuse (7) vorgesehen ist, dadurch gekennzeichnet, daß die Breite (h3) der Auslaßöffnung (43) 50 bis 70% des senkrecht, parallel zur Rotorwelle (5) gemessenen Abstandes (h4) von der Diffusorplatte (51) zu der Auslaßöffnung (43) beträgt.

2. Schnellaufender Elektromotor nach Anspruch 1, dadurch gekennzeichnet, daß die Auslaßöffnung (43) segmentiert ist durch sich im wesentlichen radial erstreckende Befestigungsstege (35) des Motorgehäuses (7).

3. Schnellaufender Elektromotor nach einem oder mehreren der vorhergehenden Ansprüche, dadurch gekennzeichnet, daß eine Höhe der Rückführleitschaufeln (48) im wesentlichen dem Abstand (h4) von der Diffusorplatte (51) bis zur Auslaßöffnung (43) entspricht.

4. Schnellaufender Elektromotor nach einem oder mehreren der vorhergehenden Ansprüche, dadurch gekennzeichnet, daß der Stator (4) im Querschnitt teilweise an das Motorgehäuse (7) angepaßt ist und teilweise mit Abstand zu dem Motorgehäuse (7) verläuft, wobei die an das Motorgehäuse (7) angepaßten Bereiche (52) mindestens 20% des Motorgehäuseumfanges entsprechen.

5. Schnellaufender Elektromotor nach Anspruch 4, dadurch gekennzeichnet, daß die angepaßten Bereiche (52) 35 bis 45% des Motorgehäuseumfanges entsprechen.

6. Schnellaufender Elektromotor nach einem oder mehreren der vorhergehenden Ansprüche 4 und 5, dadurch gekennzeichnet, daß die Umfangslinie eines angepaßten Bereiches (52) kreisabschnittsförmig verläuft.

7. Schnellaufender Elektromotor nach einem oder mehreren der vorhergehenden Ansprüche 4 bis 6, dadurch gekennzeichnet, daß ein Radius des kreisabschnittsförmigen Bereiches (52) des Stators (4) etwa dem Radius des Motorgehäuses (7) in diesem Bereich entspricht.

8. Schnellaufender Elektromotor nach einem oder mehreren der vorhergehenden Ansprüche 4 bis 7, dadurch gekennzeichnet, daß der Statorquerschnitt vier kreisabschnittsförmige Bereiche (52) aufweist, die umfangsaußenseitig jeweils durch gerade verlaufende Bereiche (53) verbunden sind.

9. Schnellaufender Elektromotor nach einem oder mehreren der vorhergehenden Ansprüche 4 bis 8, dadurch gekennzeichnet, daß im Übergang von kreisabschnittsförmigen Bereich (52) zum gerade verlaufenden Bereich (53) eine in Rotorwellenrichtung verlaufende, nutförmige Einbuchtung (55) ausgebildet ist zur Zusammenwirkung mit einer in den Innenraum des Motorgehäuses (7) ragenden Längssicke (56) desselben.

10. Schnellaufender Elektromotor nach einem oder mehreren der vorhergehenden Ansprüche, dadurch gekennzeichnet, daß in einem gerade verlaufenden Bereich (53) des Stators (4) ein Luftspalt (54) zwischen einer Stator-Außenfläche und einer Motorgehäuse-Innenfläche gebildet ist.

11. Schnellaufender Elektromotor nach einem oder mehreren der vorhergehenden Ansprüche, dadurch gekennzeichnet, daß eine freie Querschnittsfläche in dem Motorgehäuse (7) zwischen dem Stator (4) und dem Rotor (3) bzw. zwischen dem Stator (4) und dem Motorgehäuse (7) etwa 0,1 bis 0,5, bevorzugt 0,2 bis 0,4, des Querschnittes der Auslaßöffnung (43) entspricht.

12. Schnellaufender Elektromotor nach einem oder mehreren der vorhergehenden Ansprüche, wobei der Rotor (3) einen Kollektorabschnitt (58) aufweist und in dem Motorgehäuse (7) kollektorseitig Kühlluftöffnungen (15 bis 18) ausgebildet sind, dadurch gekennzeichnet, daß das Motorgehäuse (7) kollektorseitig einen kegelstumpfartigen Abschnitt (12) aufweist, welcher in Umfangsrichtung von abgeflachten Abschnitten (14) unterbrochen ist.

13. Schnellaufender Elektromotor nach Anspruch 12, dadurch gekennzeichnet, daß ein abgeflachter Abschnitt (14) sich sowohl in dem kegelstumpfartigen Abschnitt (12) des Motorgehäuses (7) wie in dem zylindrischen Bereich (11) des Motorgehäuses (7) erstreckt.

14. Schnellaufender Elektromotor nach einem oder mehreren der vorhergehenden Ansprüche 12 und 13, dadurch gekennzeichnet, daß die Kühlluftöffnungen (15 bis 18) nur in dem zylindrischen Bereich (11) und in den abgeflachten Abschnitten (14) ausgebildet sind.

15. Schnellaufender Elektromotor nach einem oder mehreren der vorhergehenden Ansprüche 12 bis 14, dadurch gekennzeichnet, daß die Kühlluftöffnungen (15 bis 18) in den abgeflachten Abschnitten (14) und in dem zylindrischen Bereich (11) jeweils um 180° versetzt sind.

16. Schnellaufender Elektromotor nach einem oder mehreren der vorhergehenden Ansprüche 12 bis 15, dadurch gekennzeichnet, daß die Kühlluftöffnungen (16, 18) in den abgeflachten Abschnitten (14) in eine Halterungsausnehmung (20, 21) für ein Aufnahmegehäuse (22) für Kohlebürsten (23) übergehen.

17. Schnellaufender Elektromotor nach einem oder mehreren der vorhergehenden Ansprüche 12 bis 16, dadurch gekennzeichnet, daß die abgeflachten Abschnitte (14) im unbeeinflußten Zustand eine konkave Ausformung aufweisen.

18. Schnellaufender Elektromotor nach Anspruch 16, dadurch gekennzeichnet, daß die Aufnahmegehäuse (22) für die Kohlebürsten (23) eine solche Erstreckung aufweisen, daß sie sich im wesentlichen bis in die den Übergang der Flachbereiche (14) zu den kegelstumpfartigen Abschnitten (12) bildenden Ecken (RE) erstrecken.

19. Schnellaufender Elektromotor nach einem oder mehreren der vorhergehenden Ansprüche 16 bis 18, dadurch gekennzeichnet, daß durch die Montage der Aufnahmegehäuse (22) ein Ausgleich der konkaven Ausformung der abgeflachten Abschnitte (14) erreicht ist, unter Ausbildung einer entsprechenden Vorspannung in dem Motorgehäuse (7).

20. Schnellaufender Elektromotor nach einem oder mehreren der vorhergehenden Ansprüche 16 bis 19, dadurch gekennzeichnet, daß die Aufnahmegehäuse (22) an das Motorgehäuse (7) angenietet sind.

21. Schnellaufender Elektromotor nach einem oder mehreren der vorhergehenden Ansprüche 13 bis 20, dadurch gekennzeichnet, daß der Übergang von einem kegelstumpfartigen Abschnitt (12) zu einem abgeflachten Abschnitt (14) in Vertikalrichtung auch flachabschnittsseitig zumindest stegartig geschlossen ausgebildet ist.

22. Schnellaufender Elektromotor nach einem oder mehreren der vorhergehenden Ansprüche 13 bis 21, dadurch gekennzeichnet, daß ein Befestigungsabschnitt (27) eines Aufnahmegehäuses (22) in Zusammenwirkung mit einem zugeordneten abgeflachten Abschnitt (14) einen Fuß (33) eines Entstörelementes (32) klemmkontaktiert.

23. Schnellaufender Elektromotor nach Anspruch 22, dadurch gekennzeichnet, daß in dem Befestigungsabschnitt (27) eine Aufnahmenut (29) für den Fuß (33) ausgebildet ist.

24. Schnellaufender Elektromotor nach einem oder mehreren der vorhergehenden Ansprüche, wobei das Motorgehäuse (7) über Befestigungsstege (35) an einem Lageraufnahmeteil (8) befestigt ist, dadurch gekennzeichnet, daß die Befestigungsstege (35) abgewinkelte Begrenzungswände (36, 37) aufweisen zur Ausbildung eines T- oder U-förmigen Profils.

25. Schnellaufender Elektromotor nach Anspruch 24, wobei das Motorgehäuse (7) endseitig im Bereich der Befestigungsstege (35) einen nach außen umgebogenen, umlaufenden Randbereich (34) aufweist, dadurch gekennzeichnet, daß der Randbereich (34) durch die abgewinkelten Begrenzungswände (36, 37) der Befestigungsstege (35) unterbrochen ist derart, daß die Wände (36, 37) in den eigentlichen Zylinderbereich (11) des Motorgehäuses (7) einlaufen.

26. Schnellaufender Elektromotor nach einem oder mehreren der vorhergehenden Ansprüche 24 und 25, dadurch gekennzeichnet, daß ein Befestigungssteg (35) im Querschnitt hinsichtlich der Begrenzungswände (36, 37) unsymmetrisch ausgebildet ist.

27. Schnellaufender Elektromotor nach einem oder mehreren der vorhergehenden Ansprüche 25 bis 26, dadurch gekennzeichnet, daß der umlaufende Randbereich (34) kreisabschnittsförmig zwischen den Befestigungsstegen (35) ausgebildet ist.

28. Schnellaufender Elektromotor nach einem oder mehreren der vorhergehenden Ansprüche 25 bis 27, dadurch gekennzeichnet, daß der Randbereich (34) in einer Projektion quer zur Rotorwelle (5) einen spitzen Winkel mit einer senkrecht zu der Rotorwelle (5) verlaufenden Ebene einschließt.

29. Schnellaufender Elektromotor nach einem oder mehreren der vorhergehenden Ansprüche 24 bis 28, dadurch gekennzeichnet, daß eine Begrenzungswand (36) zur leitblechartigen Wirkung einen Winkel von 30 bis 50° mit einer durch die Rotorwelle (5) gehenden Querebene einschließt.

30. Schnellaufender Elektromotor nach einem oder mehreren der vorhergehenden Ansprüche 24 bis 29, dadurch gekennzeichnet, daß eine in Rotorwellenrichtung gemessene Höhe (hl) der Begrenzungswand (36) etwa 70 bis 90% der Breite (h3) der Auslaßöffnung (43) entspricht.

31. Schnellaufender Elektromotor nach Anspruch 30, dadurch gekennzeichnet, daß die in Rotorwellenrichtung gemessene Höhe (h2) der anderen Begrenzungswand (37) mindestens 2mm beträgt.

32. Schnellaufender Elektromotor nach einem oder mehreren der vorhergehenden Ansprüche, wobei das Motorgehäuse (7) an dem kollektorseitigen Ende eine topfartige Aufnahme (13) für ein Rotorwellenkugellager (10) ausbildet, dadurch gekennzeichnet, daß in der Aufnahme (13) zur Abstützung im Topfboden (59) eine Wellscheibe (60) angeordnet ist, welche das Kugellager (10) in Rotorwellenrichtung vorspannt.

33. Schnellaufender Elektromotor nach einem oder mehreren der vorhergehenden Ansprüche, dadurch gekennzeichnet, daß das Motorgehäuse (7) in seinem zylindrischen Bereich (11) sich in Rotorwellenrichtung erstreckende Längssicken (56) aufweist.

34. Schnellaufender Elektromotor nach einem oder mehreren der vorhergehenden Ansprüche, dadurch gekennzeichnet, daß an dem Motorgehäuse (7) nach innen ragende Anschlagvorsprünge (57) ausgebildet sind zur axialen Positionierung des Stators (4) in dem Motorgehäuse (7).

35. Schnellaufender Elektromotor nach einem oder mehreren der vorhergehenden Ansprüche, dadurch gekennzeichnet, daß der Stator (4) mit dem Motorgehäuse (7) in seinen kreisabschnittsförmigen Bereichen (52) verklebt ist.

36. Schnellaufender Elektromotor nach einem oder mehreren der vorhergehenden Ansprüche, wobei das Gebläserad (6) eine scheibenförmige Gebläseradunterwand (63) aufweist, dadurch gekennzeichnet, daß die Unterwand (63) zwischen zwei konkav gewölbten Scheibenteilen (61, 62), welche drehfest an der Rotorwelle (5) gehaltert sind, eingefaßt ist.

37. Schnellaufender Elektromotor nach Anspruch 36, dadurch gekennzeichnet, daß die Scheiben (61, 62) über eine in Axialrichtung auf der Rotorwelle (5) aufgeschraubte Mutter (64) zur Halterung an der Rotorwelle (5) gegen ein Rotorwellenlager (9) verspannt sind.

## Claims

1. High-speed electric motor (2) having a rotor (3) and a stator (4) and a fan wheel (6) secured to a rotor shaft (5), a deflection causing the motor cooling air supplied by the fan wheel (6) to flow partly through the motor (2) and partly on the outside along a substantially cylindrical motor housing (7), the deflection being achieved by a diffusor (45) in cooperation with a fan pot (50), and the diffusor (45) having a diffusor plate (51) on which return blades (48) directed towards a motor compartment (46) are provided, and a substantially annular outlet opening (43), associated with the diffusor (45), being provided on the outside of the motor housing (7) to guide the cooling air, characterized in that the width (h3) of the outlet opening (43) is 50 to 70% of the distance (h4), measured vertically, parallel to the rotor shaft (5), from the diffusor plate (51) to the outlet opening (43).

2. High-speed electric motor according to Claim 1, characterized in that the outlet opening (43) is segmented by substantially radially extending securing flanges (35) of the motor housing (7).

3. High-speed electric motor according to one or more of the preceding claims, characterized in that a height of the return blades (48) substantially corresponds to the distance (h4) from the diffusor plate (51) to the outlet opening (43).

4. High-speed electric motor according to one or more of the preceding claims, characterized in that the stator (4) is partly matched in cross section to the motor housing (7) and extends partly at a distance from the motor housing (7), the regions (52) matched to the motor housing (7) corresponding to at least 20% of the periphery of the motor housing.

5. High-speed electric motor according to Claim 4, characterized in that the matched regions (52) correspond to 35 to 45% of the periphery of the motor housing.

6. High-speed electric motor according to one or more of the preceding Claims 4 and 5, characterized in that the circumferential line of a matched region (52) extends in a circular-segment shape.

7. High-speed electric motor according to one or more of the preceding Claims 4 to 6, characterized in that a radius of the circular-segment-shaped region (52) of the stator (4) corresponds approximately to the radius of the motor housing (7) in this region.

8. High-speed electric motor according to one or more of the preceding Claims 4 to 7, characterized in that the stator cross section has four regions (52) of circular-segment shape, which are each connected on the outer periphery by linearly-extending regions (53).

9. High-speed electric motor according to one or more of the preceding Claims 4 to 8, characterized in that at the transition from circular-segment-shaped region (52) to linearly-extending region (53), a groove-like indentation (55) extending in the direction of the rotor shaft is provided for cooperation with a longitudinal bead (56), on the motor housing (7), which projects into the interior of the motor housing (7).

10. High-speed electric motor according to one or more of the preceding claims, characterized in that in a linearly-extending region (53) of the stator (4), an air gap (54) is formed between a stator outer surface and a motor-housing inner surface.

11. High-speed electric motor according to one or more of the preceding claims, characterized in that a free cross-sectional area in the motor housing (7) between the stator (4) and the rotor (3) or between the stator (4) and the motor housing (7) corresponds to approximately 0.1 to 0.5, preferably 0.2 to 0.4, of the cross section of the outlet opening (43).

12. High-speed electric motor according to one or more of the preceding claims, the rotor (3) having a commutator section (58), and cooling-air openings (15 to 18) being provided in the commutator region of the motor housing (7), characterized in that the commutator region of the motor housing (7) has a section (12) in the shape of a truncated cone, which is interrupted in the peripheral direction by flattened sections (14).

13. High-speed electric motor according to Claim 12, characterized in that a flattened section (14) extends both in the truncated-cone-shaped section (12) of the motor housing (7) and in the cylindrical region (11) of the motor housing (7).

14. High-speed electric motor according to one or more of the preceding Claims 12 and 13, characterized in that the cooling-air openings (15 to 18) are provided only in the cylindrical region (11) and in the flattened sections (14).

15. High-speed electric motor according to one or more of the preceding Claims 12 to 14, characterized in that the cooling-air openings (15 to 18) in the flattened sections (14) and in the cylindrical region (11) are respectively offset by 180°.

16. High-speed electric motor according to one or more of the preceding Claims 12 to 15, characterized in that the cooling-air openings (16, 18) in the flattened sections (14) merge into a mounting recess (20, 21) for a receiving housing (22) for carbon brushes (23).

17. High-speed electric motor according to one or more of the preceding Claims 12 to 16, characterized in that the flattened sections (14), when in the uninfluenced state, have a concave shape.

18. High-speed electric motor according to Claim 16, characterized in that the receiving housings (22) for the carbon brushes (23) have an extent such that they substantially extend right into the corners (RE) forming the transition from the flat regions (14) to the truncated-cone-shaped sections (12).

19. High-speed electric motor according to one or more of the preceding Claims 16 to 18, characterized in that elimination of the concave shape of the flattened sections (14) is achieved by mounting the receiving housing (22), with establishment of a corresponding prestress in the motor housing (7).

20. High-speed electric motor according to one or more of the preceding Claims 16 to 19, characterized in that the receiving housings (22) are riveted onto the motor housing (7).

21. High-speed electric motor according to one or more of the preceding Claims 13 to 20, characterized in that the transition from a truncated-cone-shaped section (12) to a flattened section (14) is formed to be closed, at least in the manner of a land, in the vertical direction, even on the flat section side.

22. High-speed electric motor according to one or more of the preceding Claims 13 to 21, characterized in that a receiving section (27) of a receiving housing (22), in cooperation with an associated flattened section (14), makes a clamping contact with a foot (33) of an interference suppression element (32).

23. High-speed electric motor according to Claim 22, characterized in that a receiving groove (29) for the foot (33) is formed in the securing section (27).

24. High-speed electric motor according to one or more of the preceding claims, the motor housing (7) being secured by means of securing flanges (35) to a bearing-accommodating part (8), characterized in that the securing flanges (35) have angled-over boundary walls (36, 37) in order to form a T-shaped or U-shaped profile.

25. High-speed electric motor according to Claim 24, the motor housing (7) having at its ends, in the region of the securing flanges (35), a peripheral edge region (34) which is bent over outwards, characterized in that the edge region (34) is interrupted by the bent-over boundary walls (36, 37) of the securing flanges (35) in such a way that the walls (36, 37) run into the actual cylindrical region (11) of the motor housing (7).

26. High-speed electric motor according to one or more of the preceding Claims 24 and 25, characterized in that a securing flange (35) is provided to be asymmetric in cross section with respect to the boundary walls (36, 37).

27. High-speed electric motor according to one or more of the preceding Claims 25 to 26, characterized in that the peripheral edge region (34) is provided in a circular-segment shape between the securing flanges (35).

28. High-speed electric motor according to one or more of the preceding Claims 25 to 27, characterized in that the edge region (34), in a projection transverse with respect to the rotor shaft (5), encloses an acute angle with a plane extending at right angles to the rotor shaft (5).

29. High-speed electric motor according to one or more of the preceding Claims 24 to 28, characterized in that a boundary wall (36) encloses an angle of 30 to 50° with a transverse plane passing through the rotor shaft (5), to provide an action similar to a guide plate.

30. High-speed electric motor according to one or more of the preceding Claims 24 to 29, characterized in that a height (hl) of the boundary wall (36), measured in the direction of the rotor shaft, corresponds to approximately 70 to 90% of the width (h3) of the outlet opening (43).

31. High-speed electric motor according to Claim 30, characterized in that the height (h2) of the other boundary wall (37), measured in the direction of the rotor shaft, amounts to at least 2 mm.

32. High-speed electric motor according to one or more of the preceding claims, the motor housing (7) forming, at the commutator end, a pot-like holder (13) for a rotor-shaft ball bearing (10), characterized in that a corrugated washer (60), which prestresses the ball bearing (10) in the direction of the rotor shaft, is located in the holder (13) for the purpose of support in the bottom (59) of the pot.

33. High-speed electric motor according to one or more of the preceding claims, characterized in that the motor housing (7) has, in its cylindrical region (11), longitudinal beads (56) extending in the direction of the rotor shaft.

34. High-speed electric motor according to one or more of the preceding claims, characterized in that inwardly projecting stop projections (57) are provided on the motor housing (7) for the purpose of positioning the stator (4) axially in the motor housing (7).

35. High-speed electric motor according to one or more of the preceding claims, characterized in that the stator (4) is adhesively bonded to the motor housing (7) in its circular-segment-shaped regions (52).

36. High-speed electric motor according to one or more of the preceding claims, the fan wheel (6) having a disc-like fan-wheel lower wall (63), characterized in that the lower wall (63) is enclosed between two concavely curved disc parts (61, 62), which are mounted on the rotor shaft (5) so as to rotate with it.

37. High-speed electric motor according to Claim 36, characterized in that the discs (61, 62) are stressed against a rotor-shaft bearing (9), to hold them on the rotor shaft (5), by a nut (64) screwed onto the rotor shaft (5) in the axial direction.

## Revendications

1. Moteur électrique (2) rapide comprenant un rotor (3) et un stator (4) et une roue de soufflante (6) fixés sur un arbre de rotor (5), où, du fait d'une déviation, l'air de refroidissement moteur fourni par la roue de soufflante (6) est passé partiellement dans le moteur (2) et partiellement extérieurement sur un boîtier moteur (7) sensiblement cylindrique, la déviation étant obtenue au moyen d'un diffuseur (45) en coopération avec un pot à soufflante (50) et le diffuseur (45) présentant une plaque de diffuseur (51) sur laquelle sont réalisées des ailettes de retour (48) tournées vers une enceinte moteur (46) et, associée au diffuseur (45), une ouverture d'évacuation (43) sensiblement en forme d'anneau de cercle, pour assurer le guidage de l'air de refroidissement extérieurement sur le boîtier moteur (7), caractérisé en ce que la largeur (h3) de l'ouverture d'évacuation (43) est de 50 à 70 % de l'espacement vertical (h4) mesuré parallèlement à l'arbre moteur (5), entre la plaque de diffuseur (51) et l'ouverture d'évacuation (43).

2. Moteur électrique rapide selon la revendication 1, caractérisé en ce que l'ouverture d'évacuation (43) est segmentée au moyen de nervures de fixation (35) appartenant au boîtier moteur (7) et s'étendant sensiblement radialement.

3. Moteur électrique rapide selon l'une ou plusieurs des revendications précédentes, caractérisé en ce qu'une hauteur des ailettes de guidage de retour (48) correspond sensiblement à l'espacement (h4) entre la plaque de diffuseur (51) et l'ouverture d'évacuation (43).

4. Moteur électrique rapide selon l'une ou plusieurs des revendications précédents, caractérisé en ce que le stator (4) observé en coupe est partiellement adapté au boîtier moteur (7) et s'étend partiellement à distance du boîtier moteur (7), les zones (52) adaptées au moteur (7) correspondant au moins à 20 % de la périphérie du boîtier moteur.

5. Moteur électrique rapide selon la revendication 4, caractérisé en ce que les zones (52) adaptées correspondent à 35 à 45 % de la périphérie du boîtier moteur.

6. Moteur électrique rapide selon l'une ou plusieurs des revendications 4 et 5 précédentes, caractérisé en ce que la ligne périphérique d'une zone (52) adaptée a une allure en forme de segment de cercle.

7. Moteur électrique rapide selon l'une ou plusieurs des revendications 4 à 6, caractérisé en ce qu'un rayon de la zone (52) à forme de segment de cercle du stator (4) correspond dans cette zone à peu près au rayon du boîtier moteur (7).

8. Moteur électrique rapide selon l'une ou plusieurs des revendications 4 à 7 précédentes, caractérisé en ce que la section transversale de stator présente quatre zones (52) en forme de segment de cercle, qui sont reliés du côté périphérique extérieur respectivement par des zones (53) à allure rectiligne.

9. Moteur électrique rapide selon l'une ou plusieurs des revendications 4 à 8 précédentes, caractérisé en ce qu'à la transition entre la zone (52) en forme de segment de cercle et la zone (53) à allure rectiligne est réalisée une dentelure (53) en forme de rainure, s'étendant dans la direction de l'arbre de rotor, pour coopérer avec une moulure longitudinale (56), pénétrant dans l'espace intérieur du boîtier moteur (7), de celui-ci.

10. Moteur électrique rapide selon l'une ou plusieurs des revendications précédentes, caractérisé en ce que, dans une zone (53) à allure rectiligne du stator (4), est constitué un intervalle (54) entre la surface extérieure de stator et une surface intérieure de boîtier moteur.

11. Moteur électrique rapide selon l'une ou plusieurs des revendications précédentes, caractérisé en ce qu'une surface libre de la section transversale dans le boîtier moteur (7), entre le stator (4) et le rotor (3), respectivement entre le stator (4) et le boîtier moteur (7) correspond à peu près à 0,1 à 0,5 fois, de préférence 0,2 à 0,4 fois la section transversale de l'ouverture d'évacuation (43).

12. Moteur électrique rapide selon l'une ou plusieurs des revendications précédentes, le rotor (3) présentant un tronçon de collecteur (58) et, dans le boîtier moteur (7), des ouvertures d'air de refroidissement (15 à 18) situées du côté collecteur, caractérisé en ce que le boîtier moteur (7) présente du côté collecteur un tronçon (12) du genre d'un tronc de cône qui est interrompu en direction périphérique par des tronçons (14) aplatis.

13. Moteur électrique rapide selon la revendication 12, caractérisé en ce qu'un tronçon (14) aplati s'étend tant dans le tronçon (12) du genre d'un tronc de cône du boîtier moteur (7), que dans la zone (11) cylindrique du boîtier moteur (7).

14. Moteur électrique rapide selon l'une ou plusieurs des revendications 12 et 13 précédentes, caractérisé en ce que les ouvertures d'air de refroidissement (15 à 18) ne sont réalisées que dans la zone (11) cylindrique et dans les tronçons (14) aplatis.

15. Moteur électrique rapide selon l'une ou plusieurs des revendications 12 à 14 précédentes, caractérisé en ce que les ouvertures d'air de refroidissement (15 à 18) ménagées dans les tronçons (14) aplatis et dans la zone (11) cylindrique sont chacune décalées de 180 degrés.

16. Moteur électrique rapide selon l'une ou plusieurs des revendications 12 à 15 précédentes, caractérisé en ce que les ouvertures d'air de refroidissement (16, 18) ménagés dans les tronçons (14) aplatis se transforment en un évidement de fixation (20, 21) pour un boîtier de logement (22) destiné à des balais en charbon (23).

17. Moteur électrique rapide selon l'une ou plusieurs des revendications 12 à 16 précédentes, caractérisé en ce que les tronçons (14) aplatis présentent à l'état non influencé une allure concave.

18. Moteur électrique rapide selon la revendication 16, caractérisé en ce que les boîtiers de logement (22) destinés aux balais en charbon (23) ont une étendue faisant qu'ils s'étendent sensiblement jusqu'aux angles (RE) constituant la transition entre les zones plates (14) et les tronçons (12) tronconiques.

19. Moteur électrique rapide selon l'une ou plusieurs des revendications 16 à 18 précédentes, caractérisé en ce que par le montage des boîtiers de logement (22) on obtient une compensation de l'allure concave des tronçons (14) aplatis, avec constitution d'une précontrainte correspondant dans le boîtier moteur (7).

20. Moteur électrique rapide selon l'une ou plusieurs des revendications 16 à 19 précédentes, caractérisé en ce que les boîtiers de logement (22) sont montés sur le boîtier moteur (7) par rivetage.

21. Moteur électrique rapide selon l'une ou plusieurs des revendications 13 à 20 précédentes, caractérisé en ce que la transition entre un tronçon (12) tronconique et un tronçon (14) aplati est réalisée en direction verticale au moins fermé en nervure également du côté du tronçon plat.

22. Moteur électrique rapide selon l'une ou plusieurs des revendications 13 à 21 précédentes, caractérisé en ce qu'un tronçon de fixation (27) d'un boîtier de logement (22) établit une mise en contact par serrage, en coopération avec un tronçon (14) aplati d'un pied (33) d'un élément de déparasitage (32).

23. Moteur électrique rapide selon la revendication 22, caractérisé en ce qu'une rainure de logement (29) destinée au pied (33) est réalisée dans le tronçon de fixation (27).

24. Moteur électrique rapide selon l'une ou plusieurs des revendications précédentes, le boîtier moteur (7) étant fixé à une partie de logement de palier (8) par des nervures de fixation (35), caractérisé en ce que les nervures de fixation (35) présentent des parois de délimitation (36, 37) coudées pour constituer un profil en forme de T ou de U.

25. Moteur électrique rapide selon la revendication 24, le boîtier moteur (7) présentant à une extrémité, dans la zone des nervures de fixation (35), une zone de bordure (34) de pourtour, courbée vers l'extérieur, caractérisé en ce que la zone de bordure (34) est interrompue par les parois de délimitation (36, 37) coudées des nervures de fixation (35), de manière que les parois (36, 37) pénètrent dans la zone cylindrique (11) proprement dite du boîtier moteur (7).

26. Moteur électrique rapide selon l'une ou plusieurs des revendications 24 et 25 respectives, caractérisé en ce qu'une nervure de fixation (35) est réalisée de façon asymétrique eu égard aux parois de délimitation (36, 37) lorsqu'on observe en coupe.

27. Moteur électrique rapide selon l'une ou plusieurs des revendications 25 à 26 précédentes, caractérisé en ce que la zone de bordure (34) de pourtour est réalisée en forme de segment de cercle entre les nervures de fixation (35).

28. Moteur électrique rapide selon l'une ou plusieurs des revendications 25 à 27 précédentes, caractérisé en ce que la zone de bordure (34) fait, en une projection dessinée transversalement par rapport à l'arbre rotor (5), un angle aigu avec un plan perpendiculaire à l'arbre rotor (5).

29. Moteur électrique rapide selon l'une ou plusieurs des revendications 24 à 28 précédentes, caractérisé en ce qu'une paroi de délimitation (36), prévue pour avoir un effet du genre d'une tôle de guidage, fait un angle d'environ 30 à 50° avec un plan transversal passant par l'arbre rotor (5).

30. Moteur électrique rapide selon l'une ou plusieurs des revendications 24 à 29 précédentes, caractérisé en ce qu'une hauteur (h1) mesurée dans la direction de l'arbre de rotor de la paroi de délimitation (36) correspond à environ 70 à 90 % de la largeur (h3) de l'ouverture d'évacuation (43).

31. Moteur électrique rapide selon la revendication 30, caractérisé en ce que la hauteur (h2) mesurée dans la direction d'arbre de rotor de l'autre paroi de délimitation (37) est d'au moins 2 mm.

32. Moteur électrique rapide selon l'une ou plusieurs des revendications précédentes, le boîtier moteur (7) constituant, sur l'extrémité située collecteur, un logement (13) du genre d'un pot pour un roulement à billes (10) de l'arbre de rotor, caractérisé en ce que dans le logement (13) est disposé pour soutenir dans le fond de pot (59) un disque ondulé (60) qui met sous précontrainte le roulement à billes (10) dans la direction de l'arbre.

33. Moteur électrique rapide selon l'une ou plusieurs des revendications précédentes, caractérisé en ce que le boîtier moteur (7) présente dans sa zone cylindrique (11) des moulures longitudinales (56) qui s'étendent dans la direction de l'arbre rotor.

34. Moteur électrique rapide selon l'une ou plusieurs des revendications précédentes, caractérisé en ce que sur le boîtier moteur (7) sont réalisées des saillies de butée (57) se projetant vers l'intérieur, pour assurer un positionnement axial du stator (4) dans le boîtier moteur (7).

35. Moteur électrique rapide selon l'une ou plusieurs des revendications précédentes, caractérisé en ce que le stator (4) est collé au boîtier moteur (7), dans ses zones (52) en forme de segment de cercle.

36. Moteur électrique rapide selon l'une ou plusieurs des revendications précédentes, la roue de soufflante (6) présentant une paroi inférieure de soufflante (63) discoïde, caractérisé en ce que la paroi inférieure (63) est enchâssée entre deux parties de disque (61, 62) à courbure concave, qui sont fixées de façon assujettie en rotation sur l'arbre rotor (5).

37. Moteur électrique rapide selon la revendication 36, caractérisé en ce que les disques (61, 62) sont contraints contre un palier d'arbre moteur (9) par l'intermédiaire d'un écrou (64) vissé en direction axiale sur l'arbre rotor (5), pour assurer la fixation sur l'arbre rotor (5).
